(19) Europäisches Patentamt

European Patent Office

Office européen des brevets

(11) **EP 4 654 003 A1**

(12) **EUROPEAN PATENT APPLICATION**

(43) Date of publication:
**26.11.2025  Bulletin 2025/48**

(21) Application number: **25177769.4**

(22) Date of filing: **20.05.2025**

(51) International Patent Classification (IPC):
**G06F 7/544** (2006.01)     **G06F 7/533** (2006.01)

(52) Cooperative Patent Classification (CPC):
**G06F 7/5443; G06F 7/533**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **23.05.2024  GB 202407354**

(71) Applicant: **Imagination Technologies Limited Kings Langley
Hertfordshire WD4 8LZ (GB)**

(72) Inventors:
• **SPREIJ, Tijmen**
  **Kings Langley, WD4 8LZ (GB)**
• **FERRERE, Thomas**
  **Kings Langley, WD4 8LZ (GB)**
• **ZOLNAI-LUCAS, Jeremy**
  **Kings Langley, WD4 8LZ (GB)**

(74) Representative: **Page White Farrer
Bedford House
21a John Street
London WC1N 2BF (GB)**

(54) **SHARED PARTIAL PRODUCTS FOR A DOT PRODUCT OPERATION IN HARDWARE**

(57)     There is provided a hardware module for performing dot product operations. The hardware module comprises receiver circuitry configured to perform: receiving an input of a first vector and a second vector, each of the first and second vectors comprising at least two elements, wherein each element is a binary encoded integer. The hardware module also comprises logic circuitry configured to perform: generating an array of partial products for a dot product operation between the first vector and the second vector, the array of partial products comprising a number of, N, rows of bits. The logic circuitry comprises: grouping circuitry configured to perform: grouping bits of the at least two elements of the second vector into a binary number, wherein each binary number is associated with a respective row of the N rows of bits, and selector circuitry configured to perform: selecting a partial product value for each of the N rows of bits based on the binary number that is associated with the respective row, such that one partial product is generated per binary number. The hardware module also comprises adder circuitry configured to perform: adding the N rows of bits together to compute an output associated with the dot product operation between the first and second vectors.

FIGURE 3

**Description**

CROSS-REFERENCE TO RELATED APPLICATION

This application claims priority from UK patent application GB2407354.6 filed on 23 May 2024, which is herein incorporated by reference in its entirety.

TECHNICAL FIELD

The present disclosure related to performing multiplication operations in hardware. In particular, for performing dot product operations.

BACKGROUND

A given processor will comprise execution logic which is configured to recognize a certain predefined instruction set. The instruction set is the fundamental set of definitions of the types of machine code instruction which the processor is configured to recognize and execute. Each type of instruction in the instruction set is defined by its opcode, which specifies the type of operation to be performed. Each type of instruction may further comprise zero or more operand fields depending on the instruction type. For instance some types of instruction may take a single source operand. An example would be a sign injection which flips the sign of the operand value. Other types may take multiple operands. Examples of these include add, multiply or divide, each of which takes two source operands and a destination operand specifying a location at which to place the result. Source operands may be expressed in terms of a location from which to take the source value.

A value waiting to be operated on will be held in a storage element of certain fixed width, typically a register. For example typically, in a reduced instruction set computer (RISC), values are loaded from memory into registers by executing load instructions, then a further instruction may operate on the values from the registers and the results are written back to registers. For instance a first load instruction may be executed to load a first source value from memory into a first register, and a second load instruction may be executed to load a second source value from memory to a second register. Each load instruction takes a source operand specifying a memory address from which to load a value and a destination operand specifying a destination register address in which to place the loaded value. Subsequently, an instruction for combining two values, such as to add, multiply or divide them, may then be executed, specifying register addresses of the first and second registers as its source operands and a destination register address as its destination operand. The result may then be saved back to memory by executing a store instruction, which takes a source operand specifying the register address from which to take the value and a destination operand specifying the memory address to store the value to. Values may also be moved between registers by executing a move instruction.

SUMMARY

This Summary is provided merely to illustrate some of the concepts disclosed herein and possible implementations thereof. Not everything recited in the Summary section is necessarily intended to be limiting on the scope of the disclosure. Rather, the scope of the present disclosure is limited only by the claims.

There is provided a hardware module for performing dot product operations. The hardware module comprises receiver circuitry configured to perform: receiving an input of a first vector and a second vector, each of the first and second vectors comprising at least two elements, wherein each element is a binary encoded integer. The hardware module also comprises logic circuitry configured to perform: generating an array of partial products for a dot product operation between the first vector and the second vector, the array of partial products comprising a number of, N, rows of bits. The logic circuitry comprises: grouping circuitry configured to perform: grouping bits of the at least two elements of the second vector into a binary number, wherein each binary number is associated with a respective row of the N rows of bits, and selector circuitry configured to perform: selecting a partial product value for each of the N rows of bits based on the binary number that is associated with the respective row, such that one partial product is generated per binary number. The hardware module also comprises adder circuitry configured to perform: adding the N rows of bits together to compute an output associated with the dot product operation between the first and second vectors

According to an aspect, there is provided a hardware module for performing dot product operations, the hardware module comprising: receiver circuitry configured to perform: receiving an input of a first vector and a second vector, each of the first and second vectors comprising at least two elements, wherein each element is a binary encoded integer; logic circuitry configured to perform: generating an array of partial products for a dot product operation between the first vector and the second vector, the array of partial products comprising a number of, N, rows of bits, wherein the logic circuitry comprises: grouping circuitry configured to perform: grouping bits of the at least two elements of the second vector into a binary number, wherein each binary number is associated with a respective row of the N rows of bits; and selector circuitry configured to perform: selecting a partial product value for each of the N rows of bits based on the binary number that is associated with the respective row, such that one partial product is generated per binary number; and adder circuitry configured to perform: adding the N rows of bits together to compute an output associated with the dot product operation between the first and second vectors.

In some examples, each element is a binary radix-2 encoded integer.

In some examples, each of the N rows of bits is considered to be one of the partial products.

In some examples, for each element, the binary encoded integer is N bits in length.

In some examples, each of the elements in the first and second vectors have the same bit length.

In some examples, equal weight bits of the at least two elements of the second vector are grouped to form the binary number.

In some examples, the logic circuitry is further configured to perform: determining a plurality of options that are selectable for the value of the partial products in each of the N rows of bits, wherein the determining of the plurality of options is based on the at least two elements of the first vector, and wherein the selector circuitry is further configured to perform: for each of the N rows of bits, using the binary number associated with the respective row to select an option from the plurality of options for the value of the partial product of the respective row.

In some examples, the plurality of options comprises four options.

In some examples, the logic circuitry is further configured to perform: computing a summation of two elements of the at least two elements of the first vector to compute a sum, wherein the sum is one of the plurality of options, wherein the computing of the sum is performed before the generating of the partial products.

In some examples, the binary number is a two bit number, and the logic circuitry is further configured to perform: when two bits of the binary number are 0, selecting a first option of the plurality of options for the corresponding partial product, wherein the first option is a string of zeros; when a first bit of the binary number is 1 and a second bit of the binary number is 0, selecting a second option of the plurality of options for the corresponding partial product, wherein the second option is associated with a first element of the two elements of the first vector; when the first bit of the binary number is 0 and the second bit of the binary number is 1, selecting a third option of the plurality of options for the corresponding partial product, wherein the third option is associated with a second element of the two elements of the first vector; when the first bit and the second bit of the binary number are 1, selecting the sum of the two elements of the first vector as a fourth option of the plurality of options for the corresponding partial product; wherein the value associated with the selected option is left-shifted by a weight of the bits in the binary number.

In some examples, the grouping of bits of the at least two elements of the second vector into the binary number comprises pairing equal weight bits of the two elements of the second vector into binary number pairs.

In some examples, the grouping comprises grouping equal weight bits of the two elements of the second vector and a third element of the second vector into binary numbers, wherein each binary number is used to generate the partial product for each of the N rows of bits, such that one partial product is generated per binary number.

In some examples, the logic circuitry is further configured to perform: determining the plurality of options based on the elements of the at least two elements of the first vector, wherein a bitwise operation between the elements of the first vector is subtracted from each of the plurality of options to define a plurality of modified options, wherein each of the plurality of modified options is a bitwise operation between the elements of the first vector.

In some examples, the binary number is a two bit number, and the logic circuitry is further configured to perform: when two bits of the binary number are 0, selecting a first modified option of the plurality of modified options for the corresponding partial product, wherein the first modified option is sign extended with 1s; when a first bit of the binary number is 1 and a second bit of the binary number is 0, selecting a second modified option of the plurality of modified options for the corresponding partial product, wherein the second modified option is associated with a first element of the two elements of the first vector; when the first bit of the binary number is 0 and the second bit of the binary number is 1, selecting a third modified option of the plurality of modified options for the corresponding partial product, wherein the third modified option is associated with a second element of the two elements of the first vector; when the first bit and the second bit of the binary number are 1, selecting a fourth modified option of the plurality of modified options for the corresponding partial product; the value associated with the selected modified option is left-shifted by a weight of the bits in the binary number.

In some examples, the logic circuitry is further configured to perform: modifying the array of partial products, the modifying comprising: adding an inverse of the bitwise operation that was subtracted from each of the four options to each of the N rows of bits, in order to compensate for the subtraction.

In some examples, the array of partial products that has been generated comprises: a first additional row of bits and a second row of additional bits that are associated with the subtraction of the bitwise operation from the plurality of options, and a sign increment row of bits.

In some examples, the logic circuitry is further configured to perform: when the elements of the first vector are signed: inverting a most significant bit of each of the N rows of bits, inserting a sign extension of 1s above the most significant row of the N rows of bits, and adding an increment in an additional row at an index of N-1.

In some examples, the elements are the first vector are multiplicands.

In some examples, the logic circuitry is further configured to perform: when the elements of the second vector are signed: inverting N significant bits of a most significant row of the N rows of bits, inserting a sign extension of 1s above the most significant row of the N rows of bits, and adding an increment in an additional row at an index of N-1.

In some examples, the elements are the second vector are multipliers.

In some examples, when the elements of the first vector and the elements of the second vector are signed and at least two of the elements of the first and second vectors have different widths, the respective adding of the increment in the additional row at the index of N-1 are added to become a single increment at index N.

In some examples, the logic circuitry is further configured to perform: when the elements of the first vector are signed: setting a most significant bit of each of the N rows of bits to zero, and inverting a most significant bit of the option that has been selected, wherein a sign extension will begin one bit above a most significant bit of a most significant row of the N rows of bits.

In some examples, the logic circuitry is further configured to perform: when the elements of the second vector are signed: inverting significant bits of the most significant row of the N rows of bits, wherein the sign extension of the most significant row is not inverted, and removing the first additional row from the array of partial products.

In some examples, the logic circuitry is further configured to perform: recoding each of the binary numbers into a sequence of alternating binary number pairs in the form of (x,y), wherein the numbers of x and y are chosen from a set comprising: negative two, negative one, zero, one and two.

In some examples, the logic circuitry is further configured to perform: recoding each of the binary numbers into a sequence of alternating binary number pairs in the form of (u,v) and (x,y), wherein numbers of u and v are chosen from a first set comprising zero, and one, and a second set comprising: negative two, negative one, zero, one and two respectively, wherein the digits of x and y are chosen from a third set comprising: negative two, negative one, zero, one and two, and a fourth set comprising: zero, and two, respectively.

In some examples, the first vector and second vector each comprise at least one further element, such that each of the first and second vectors comprise at least three elements, wherein the generating comprises grouping equal weight bits of the at least three elements of the second vector into the binary numbers.

According to an aspect, there is provided a graphics processing system comprising the hardware module described herein.

According to an aspect, there is provided a method comprising: receiving an input of a first vector and a second vector, each of the first and second vectors comprising at least two elements, wherein each element is a binary encoded integer; generating an array of partial products for a dot product operation between the first vector and the second vector, the array of partial products comprising a number of, N, rows of bits; grouping bits of the at least two elements of the second vector into a binary number, wherein each binary number is associated with a respective row of the N rows of bits; selecting a partial product value for each of the N rows of bits based on the binary number that is associated with the respective row, such that one partial product is generated per binary number; and adding the N rows of bits together to compute an output associated with the dot product operation between the first and second vectors.

According to an aspect, there is provided a hardware module configured to perform the methods described herein.

In some examples, the graphics processing system described herein is embodied in hardware on an integrated circuit.

According to an aspect, there is provided a method of manufacturing, using an integrated circuit manufacturing system, and a hardware module as described herein.

According to an aspect, there is provided a method of manufacturing, using an integrated circuit manufacturing system, and a hardware module as described herein, the method comprising: processing, using a layout processing system, a computer readable description of the hardware module so as to generate a circuit layout description of an integrated circuit embodying the hardware module; and manufacturing, using an integrated circuit generation system, the hardware module according to the circuit layout description.

According to an aspect, there is provided computer readable code configured to cause the methods described herein to be performed when the code is run.

According to an aspect, there is provided computer readable storage medium having encoded thereon the computer readable code described herein.

According to an aspect, there is provided an integrated circuit definition dataset that, when processed in an integrated circuit manufacturing system, configures the integrated circuit manufacturing system to manufacture a hardware module as described herein.

According to an aspect, there is provided a non-transitory computer readable storage medium having stored thereon a computer readable description of a hardware module as described herein that, when processed in an integrated circuit manufacturing system, causes the integrated circuit manufacturing system to manufacture an integrated circuit embodying the hardware module.

According to an aspect, there is provided a non-transitory computer readable storage medium having stored thereon a computer readable description of a hardware module as described herein which, when processed in an integrated circuit manufacturing system, causes the integrated circuit manufacturing system to: process, using a layout processing system, the computer readable description of the hardware module so as to generate a circuit layout description of an integrated circuit embodying the hardware module; and manufacture, using an integrated circuit generation system, the graphics processing system according to the circuit layout description.

According to an aspect, there is provided an integrated circuit manufacturing system configured to manufacture a hardware module as described herein.

According to an aspect, there is provided an integrated circuit manufacturing system comprising: a non-transitory computer readable storage medium having stored thereon a computer readable description of a hardware module as described herein; a layout processing system configured to process the computer readable description so as to generate a circuit layout description of an integrated circuit embodying the hardware module; and an integrated circuit generation system configured to manufacture the hardware module according to the circuit layout description.

In some examples, the integrated circuit manufacturing system further comprises: a layout processing system configured to determine positional information for logical components of a circuit derived from the integrated circuit description so as to generate a circuit layout description of an integrated circuit embodying the hardware module.

The hardware module may be embodied in hardware on an integrated circuit. There may be provided a method of manufacturing, at an integrated circuit manufacturing system, a hardware module. There may be provided an integrated circuit definition dataset that, when processed in an integrated circuit manufacturing system, configures the system to manufacture a hardware module. There may be provided a non-transitory computer readable storage medium having stored thereon a computer readable description of a hardware module that, when processed in an integrated circuit manufacturing system, causes the integrated circuit manufacturing system to manufacture an integrated circuit embodying a hardware module.

There may be provided an integrated circuit manufacturing system comprising: a non-transitory computer readable storage medium having stored thereon a computer readable description of the hardware module; a layout processing system configured to process the computer readable description so as to generate a circuit layout description of an integrated circuit embodying the hardware module; and an integrated circuit generation system configured to manufacture the hardware module according to the circuit layout description. The layout processing system may be configured to determine positional information for logical components of a circuit derived from the integrated circuit description so as to generate the circuit layout description of the integrated circuit embodying the graphics processing system.

There may be provided computer program code for performing any of the methods described herein. There may be provided non-transitory computer readable storage medium having stored thereon computer readable instructions that, when executed at a computer system, cause the computer system to perform any of the methods described herein.

The above features may be combined as appropriate, as would be apparent to a skilled person, and may be combined with any of the aspects of the examples described herein.

BRIEF DESCRIPTION OF THE DRAWINGS

Examples will now be described in detail with reference to the accompanying drawings in which:

Figure 1a shows a schematic representation of a multiplication operation being performed in hardware;

Figure 1b shows a schematic representation of a dot product operation being performed in hardware;

Figure 2 shows a schematic representation of partial product generation in a dot product operation;

Figure 3 shows a schematic representation of a first example of partial product generation for a dot product operation performed in hardware;

Figure 4 shows a schematic representation of a second example of partial product generation for a dot product operation performed in hardware;

Figure 5 shows a schematic representation of the second example of partial product generation for a dot product operation performed in hardware with the sign extensions summed together;

Figure 6 shows a graphical representation of area-delay trade-offs for three different implementations for a dot product operation for 8-bit inputs;

Figure 7 shows a graphical representation of area-delay trade-offs for three different implementations for a dot product operation for 16-bit inputs;

Figure 8 shows a schematic representation of a first example of partial product generation for a dot product operation for an optionally signed input performed in hardware;

Figure 9 shows a schematic representation of the first example of partial product generation for a dot product operation for an optionally signed input performed in hardware with the sign extensions removed;

Figure 10 shows a schematic representation of a second example of partial product generation for a dot product operation for a signed input performed in hardware;

Figure 11 shows a schematic representation of partial product generation for a four-element dot product operation performed in hardware;

Figure 12 shows a schematic representation of a hardware module;

Figure 13 shows an example method flow performed by a hardware module;

Figure 14 shows a computer system in which a graphics processing system is implemented; and

Figure 15 shows an integrated circuit manufacturing system for generating an integrated circuit embodying a graphics processing system.

The accompanying drawings illustrate various examples. The skilled person will appreciate that the illustrated element boundaries (e.g., boxes, groups of boxes, or other shapes) in the drawings represent one example of the boundaries. It may be that in some examples, one element may be designed as multiple elements or that multiple elements may be designed as one element. Common reference numerals are used throughout the figures, where appropriate, to indicate similar features.

DETAILED DESCRIPTION

The following description is presented by way of example to enable a person skilled in the art to make and use the invention. The present invention is not limited to the embodiments described herein and various modifications to the disclosed embodiments will be apparent to those skilled in the art.

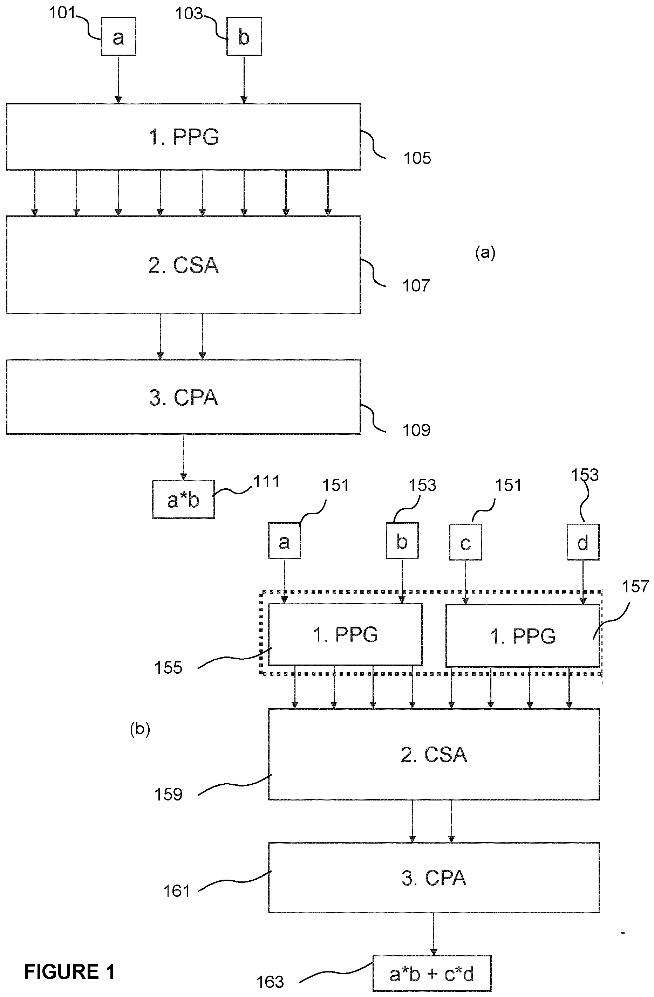

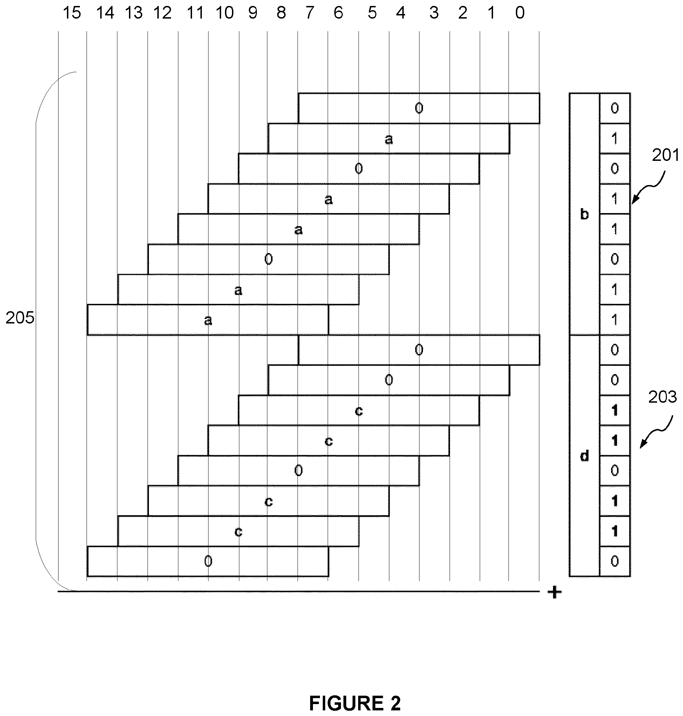

Certain general aspects of multiplication operations being performed in hardware are briefly explained with reference to Figures 1a, 1b and 2 to assist in understanding the technology underlying the described examples.

In computing, it is common for hardware devices, such as processors, to perform multiplication operations between numbers. For example, a multiply operation between two binary-encoded numbers. Multiply operations may be performed in a number of different ways, such as the method shown in Figure 1a.

Figure 1a shows a schematic representation of a multiplication operation being performed in hardware. Many hardware multipliers are split into three parts of stages. In the example of Figure 1a, a first value (herein 'a') 101 and a second value (herein 'b') 103 are to be multiplied together. A first stage of the three stages is partial product generation 105. As part of the first stage, a plurality ('N') of rows of bits are generated based on the inputs of 'a' 101 and 'b' 103. The sum of the N rows of bits equals the product of the inputs. For example, for radix-2 implementation (which may be considered to be an "and" array), one of the inputs is considered to be "multiplicand" e.g., 'a' 101, the other is a "multiplier" e.g. 'b' 103. There will be one row (or one partial product) per bit of multiplier b. When a bit (of 'b' 103) = 0, then the row will be all 0's. When a bit = 1, then the row is equal to multiplicand 'a' 101.

A second stage of the three stages is a carry save adder 107. The carry save adder 107 reduces the N rows of bits to two rows. The reduction of N rows to two rows may be performed over a number of phases or steps. Basic adders may be used to reduce the number of rows/bits per cycle. The carry save adder 107 defers a 'full' carry propagation, so that a propagation needs to be performed on a fewer number of rows. Example architectures of the carry save adder 107 include a Wallace architecture or a Dadda architecture. A third stage of the three stages is a carry propagate adder 109. The carry propagate adder 109 adds the two rows together with a full carry propagation. There are a number of implementation choices associated with the carry propagate adder 109 stage, such as for example, ripple carry, parallel prefix, etc. An output 111 from the three stages of the multiplication operation is the computed value of a*b.

In mathematics, the dot product is an algebraic operation that takes two equal-length sequences of numbers (e.g., coordinate vectors), and returns a single number. An example method for determining a dot product in hardware is shown in Figure 1b.

Figure 1b shows a schematic representation of a dot product operation being performed in hardware. The dot product may be computed in a similar way to the multiplication depicted in Figure 1a, except the multiplication is split into two parts at the partial products stage. In Figure 1b, the dot product between a first vector, V1, 151 comprising two elements: (a, c) and a second vector, V2, 153 comprising two elements: (b, d) is computed. In order to compute the dot product between the first 151 and second vectors 153, the product of the first elements of the vectors is to be added to the product of the second elements of the vectors.

A first partial product generation 155 computes the a*b part of the dot product separately. A second partial product generation 157 computes the c*d part of the dot product. In this manner, a*b and c*d are computed separately. The first partial product generation 155 will generate N rows of partial products for a*b and the second partial product generation 157 will generate N rows of partial products for c*d. As the first partial product generation 155 will generate N rows and the second partial product generation 157 will generate N rows, there are total of 2N rows of partial products. A carry save adder 159 is able to take the partial products from both the first partial product generation 155 and the second partial product generation 157 stages to reduce the total number of 2N rows of bits to two rows. A carry propagate adder 161 is then able to add together the two rows of bits. An output 163 is the computed value of a*b + c*d (i.e., $V1 \cdot V2$).

The computing of the dot product as shown in Figure 1b includes the generating of a number of rows of partial products. This is depicted in more detail in Figure 2.

Figure 2 shows a schematic representation of partial product generation in a dot product operation. The example depicted in Figure 2 is also determining a*b + c*d (i.e., $V1 \cdot V2$), as in Figure 1b. The first vector, V1, comprises two elements: (a, c) and the second vector, V2, comprises two elements: (b, d). Element 'b' 201 is the binary encoded integer [11011010], while element 'd' 203 is the binary encoded integer [01101100]. In this manner, each element is an N-bit (here 8-bit) integer. In this context, a binary encoded integer is an integer that is represented in binary. For example, the integer 210 as a binary encoded integer is 11010010.

The partial products for a*b are computed first. Here, 'a' and 'c' are considered to be the multiplicands, while 'b' and 'd' are considered to be the multipliers. If a bit of multiplier 'b' 201 equals 0, then the row 205 of the partial product will be all 0's. If a bit of multiplier 'b' 201 equals 1, then the row 205 is equal to multiplicand 'a'. As each element is 8-bits in length, each row 205 (partial product) is also 8-bits.

The partial products for c*d are then computed. If a bit of multiplier 'd' 203 equals 0, then the row 205 of the partial product will be all 0's. If a bit of multiplier 'd' 203 equals 1, then the row 205 is equal to multiplicand 'c'.

As each element is an 8-bit number, this means that there are sixteen (i.e., 2N) rows 205 of partial products. The rows 205 need to be added together in order to output the dot product of V1 and V2.

The more rows of partial products that need to be added together, the higher the computational complexity. More rows to be added together can lead to a higher latency delay to perform the computation, and/or may require a larger area in hardware. In this manner, it is desirable to reduce the number of partial product rows.

Some hardware multiplier implementations make use of recoding schemes, which aim at reducing the number of generated partial products to be summed. They proceed by rewriting the multiplier input using a different, higher-radix set. As an example, Booth radix-4 transforms the input multiplier into a number with the number set -2,-1,0,1,2 such that each partial product is the input multiplicand, possibly negated and shifted by one. Compared to the standard binary radix-2 method based on the number set 0,1, this halves the number of generated partial products. The recoding is fully parallel and width-independent. More advanced schemes, such as Booth radix-8 and Booth radix-16, enable further reduction of partial products by sharing some of the intermediate sums. These schemes are not width-independent, but are effective as the input width further increases. However, these recoding schemes have the associated problem that Booth (e.g., radix-4, radix-8, radix-16) require encoding to be performed on the multipliers, which happens before the partial products are able to be selected for each row. This means additional logic is required when using these schemes. Additional logic means that more area is used and delays are increased. The number of partial product rows that are needed if the multiplier has N bits, is equal to ceil((N+1)/log2(R)) when using Booth, where R is the radix, and the ceil() function rounds up to the nearest integer. Radix-4 booth encoding does not require the pre-calculation of 'hard multiples' such as the multiplicand times 3, but in higher radices, these pre-calculations cannot be avoided. These 'hard multiples' add area, and because they need to be performed before the partial products are selected, also add delay. This means that these higher radix encodings are only beneficial for multiplications with large widths, where the overhead of calculating the 'hard multiples' is amortized and is outweighed by the benefit of having less rows than the alternatives. Furthermore, using a Booth encoding schemes is inherently a signed implementation. This results in extra bits to serve as sign increments (the negative numbers are represented using 2's complement, which requires inverting all bits and adding 1 = the sign increment). This is still the case if the multiplier is only used for multiplying unsigned numbers. In this manner, extra bits may be used unnecessarily.

One or more of the examples or embodiments described below aim to address one or more of the problems identified above.

Embodiments will now be described by way of example only.

As described above, the hardware implementation of arithmetic expressions featuring several multiplications such as dot products may use several steps, including partial product generation, and then subsequent steps to add the partial products, such as carry-save reduction and carry-propagate addition. In one or more of the examples described below, methods for implementation in hardware are described which generate partial products such that the number of partial products is reduced, as well as their width and the complexity required to generate them.

Many of the examples below are described with reference to determining an output for the expression of a*b + c*d, wherein a, b, c and d are elements of two vectors (say V1, and V2). Vector V1 comprises (a, c) and vector v2 comprises (b, d). It should be understood that computing of this example dot product is to aid in the understanding of the disclosure. In other examples, a dot product between any two suitable vectors or number may be computed using the same method. In many of the following examples, each element of V1 and V2 are 8-bit binary encoded integers. It should be understood that this bit-size is an example only. The example methods below are not limited to this example bit-size.

In a first example (herein referred to as a 'first scheme'), a dot product between vector V1 and vector V2 is computed by computing a+c as a pre-processing step. Bits of equal weight in the multipliers b and d are grouped (or paired) to form a binary number. In other examples, the binary number is referred to as a digit, a 2-bit digit or a binary value. The weight of a bit is associated with an index of the bit. The weight of a bit is associated with the index, i, in that weight = $2^i$. Stated differently, a bit in an array/vector of 'b[i]' has an index 'i' and a weight of $2^i$. For example, if there are two 8-bit binary integers, then the $1^{st}$ bits (e.g., LSBs) of each of the two 8-bit integers may be said that have equal weights. These equal weight bits are grouped to form a binary number.

Each binary number may be considered to be a selector for each of a set of (shared) partial products. If both binary numbers/selector bits are 0, the corresponding partial product is set to 0. If the bit in the binary number from b is 1 (i.e., the first digit), and the bit from d is 0 (i.e., the second digit), then a is selected for the partial product row. If the bit in the binary number from d is 1, and the bit from b is 0, then c is selected. If both of the binary numbers are 1, then the pre-computed sum of multiplicands a+c is selected. The selected value (e.g., 0, a, c, or a+c) for a partial product is left shifted by the index of the multiplier bits that were used in the selector. This is equivalent to a multiplication by the weight of the multiplier bits (as a weight of '$2^i$' is associated with index 'i'). As the addition of two 8-bit numbers (a+c) is 9-bits in length, each row of partial products in this example is 9-bits. For selected values that are 8 bits in length, such as a or c, the row is padded with a zero.

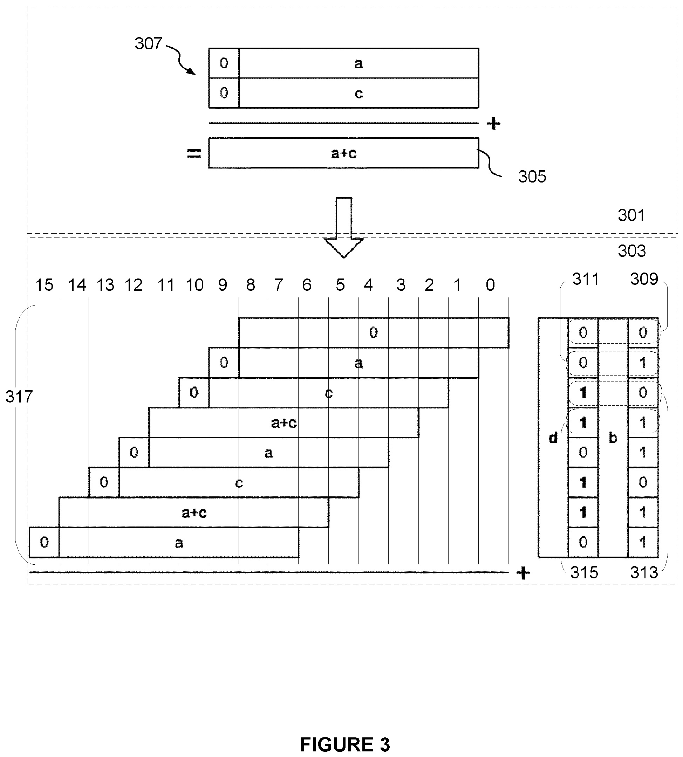

In this manner, in the first scheme, the partial product generation is shared between two multiplications (a*b and c*d). Equal weight bits of the multipliers (a and c) are grouped to form digits, wherein each digit is used to set/select a partial product row. Stated differently, each digit will determine the value selected for a partial product, wherein the value is associated with one of the options of: 0, a, c, or a+c. Due to this, the sum of the multiplicands (a+c) is to be computed before the partial products are generated. With this method, there will be half the number of partial product rows compared to the method depicted in Figure 2. This is described in more detail alongside Figure 3.

Figure 3 shows a schematic representation of a first example of partial product generation for a dot product operation performed in hardware. The dot product operation is between vector V1 and vector V2, as described above. The partial product generation the dot product is split into a first stage 301 and a second stage 303, wherein the first stage 301 is performed before the second stage 303.

In the example of Figure 3, vector, V1, comprises two elements: (a, c) and the vector, V2, comprises two elements: (b, d). Each element is a binary encoded integer (i.e., represented in binary). Each of the elements has the same bit length (8 bits in this example). From the MSB (on the left-hand side) to the least significant bit (LSB) (on the right), the elements of vector V1 and vector V2 are as follows:

Element 'a' = [10011001]

Element 'b' = [11011010]

Element 'c' = [01010101]

Element 'd' = [01101100].

In the first stage 301, the two 8-bit elements of vector 1 are added together to determine a+c 305. a+c is 9-bits in length. As depicted in Figure 3, element a and element c may be padded with a zero 307 after the most significant bit (MSB), before the addition operation.

In the second stage 303, equal weight bits of elements b and d are grouped to form digits (also referred to as 'binary numbers' or 'binary number pairs'). Each digit sets a partial product row, such that one partial product is generated per digit. For example, the $1^{st}$ bits 309 of b and d are grouped to form (0,0). When the digits are (0,0), then the row is set to all 0's (zeros). The $2^{nd}$ bits 311 of b and d are (1,0), which sets the row to multiplicand a. The $3^{rd}$ bits 313 of b and d are (0,1), which sets the row to multiplicand c. The $4^{th}$ bits 315 of b and d are (1,1), which sets the row to a+c. The sum of a+c has been pre-computed in the first stage 301. The other rows are computed in the same manner, such that the 8 computed rows are 0, a, c, a+c, a, c, a+c, a.

The partial product rows 317 are determined to be:

$$row\ 1 = 0 = \qquad [000000000],$$

$$row\ 2 = a = \qquad [010011001],$$

$$row\ 3 = c = \qquad [001010101],$$

$$row\ 4 = a+c = \quad [011101110],$$

$$row\ 5 = a = \qquad [010011001],$$

$$row\ 6 = c = \qquad [001010101],$$

$$row\ 7 = a+c = \quad [011101110],$$

$$row\ 8 = a = \qquad [010011001].$$

The eight rows of partial products may (together) be termed the partial products array.

In this manner, eight rows of partial products are determined for the partial products. This is half of the number of partial products that are determined when splitting up the multiplication (as shown in Figure 2). The reduction in the number of rows mean that the hardware area needed to perform the computation is reduced and/or the delay time is reduced.

The eight rows of partial products are summed together to determine an output for the dot product between vector V1 and vector V2. Any suitable implementation may be used to perform the summation. For example, with a carry save adder and a carry propagate adder.

In a second example (herein referred to as a 'second scheme'), a dot product between vector V1 and vector V2 is computed without pre-computation of a+c. a+c may be re-written as a^c + (a&c)<<1, where ^ is a bitwise XOR operation, & is a bitwise AND operation, and << is a left hand shift. This may be referred to as delayed-carry representation.

The term a&c has the property that adding it to a^c results in a|c, where | is a bitwise OR operation. This is a purely bitwise operation without carry propagation.

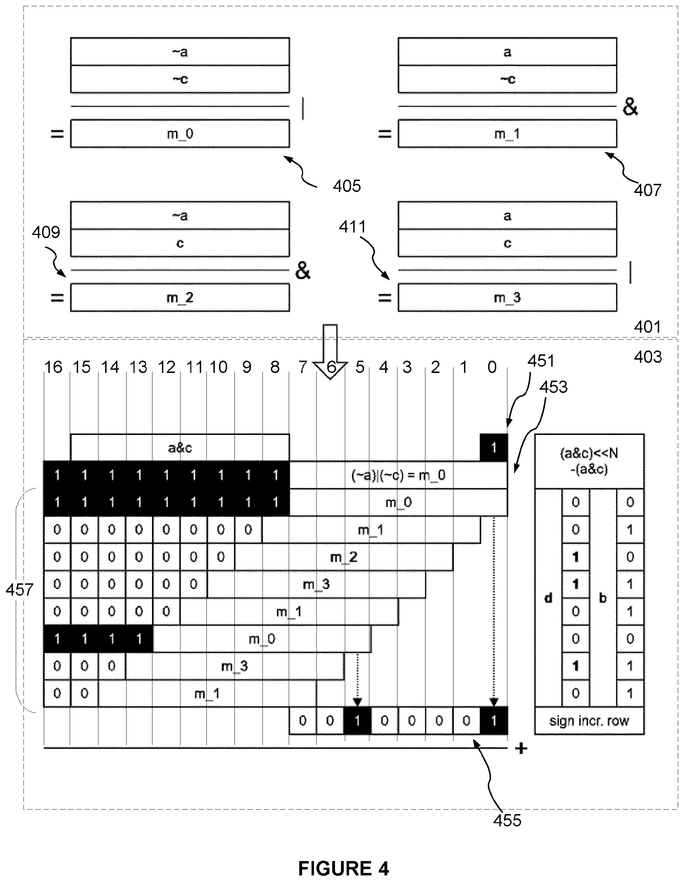

Adding a&c to 'a' results in a&~c + (a&c)<<1. Adding a&c to 'c' results in ~a&c + (a&c)<<1 (where ~ is a bitwise inversion of a vector). Finally, a&c itself can be rewritten as -(a&c) + (a&c)<<1. This means that all four options for the shared partial products from the first scheme (a+c, a, c and 0) may be reformulated into the sum of the delayed carry (a&c) <<1 and a bitwise operation between a and c (a|c, a&~c, ~a&c and -(a&c) = ~a|~c +1), assuming (a&c) is added to the original shared partial product value. In the second scheme, this assumption is enforced by adding -(a&c) + (a&c) to the set of partial products to be added. -(a&c) becomes ~a|~c + 1, and +a&c is added to the first shared partial product (weight 0). For the remaining shared partial products, the (a&c) to be added comes from the delayed carry of the previous row. The most significant row produces an additional new row with the value (a&c)<<n, where n is the width of the multipliers. The increments that arise from the negated values also form a new partial product row, giving a total of three extra partial products. This is described in more detail alongside Figure 4.

Figure 4 shows a schematic representation of a second example of partial product generation for a dot product operation performed in hardware. The dot product operation is between vector V1 and vector V2, as described above. The partial product generation of the dot product is split into a first stage 401 and a second stage 403, wherein the first stage 401 is performed before the second stage 403.

In the example of Figure 4, vector, V1, comprises two elements: (a, c) and the vector, V2, comprises two elements: (b, d). Each element is a binary encoded integer. From the MSB (on the left-hand side) to the least significant bit (LSB) (on the right), the elements of vector V1 and vector V2 are as follows:

$$Element\ 'a' = [10011001]$$

$$Element\ 'b' = [11011010]$$

Element 'c' = [01010101]

Element 'd' = [01001100].

In Figure 4, the four options for partial products are changed from the options of 0, a, c and a+c in the first scheme. As described above, there is a subtracting of (a&c) from each option to provide four options of m_0 405, m_1 407, m_2 409 and m_3 411. This is determined in the first stage 401.

The four options m_0, m_1, m_2 and m_3 are determined as follows. By subtracting (a&c) from each option: 0: -(a&c) = ~(a&c) + 1 = (~a)|(~c) + 1 with sign extension (herein m_0 405), a: a - (a&c) = a&(~c) (herein m_1 407), c: c - (a&c) = (~a)&c (herein m_2 409), and a+c: a+c - (a&c) = (a&c)<<1 + (a^c) - (a&c) = (a&c) + (a^c) = (alc) (herein m_3 411). Each of the four options m_0, m_1, m_2 and m_3 are bitwise operations, which means that the computation is relatively simple.

In Figure 4, m_0 405 is (~a)|(~c) without the sign extension. The sign extension is shown explicitly as the series of 1's preceding m_0 in the row. The "+1" part of m_0 is incorporated into the eleventh row (i.e., the sign increment row).

In order to compensate for the subtracting of (a&c) from each of the four options, (a&c) is added at every weight. Stated differently, a&c is added once for each binary number, and left shifted by the weight of the respective of that binary number. This may be written as:

$$= (a\&c) * (111\ldots11)b = (a\&c) * (2^{N-1})$$

$$= (a\&c)<<N - (a\&c)$$

-(a&c) can be written as (~a)|(~c) + 1 with sign extension

Stated differently, as -(a&c) << i has been added for every partial product row i (from 0 to N-1), the positive of this i.e., ((a&c) << i) is added for each i in order for the sum of all rows to add to the correct result. All these compensation terms may be added into one compensation term with the value of (a&c) * (1<<(N-1) + 1<<(N-2) + ... + 1<<2 + 1<<1 + 1) = (a&c) * [1,1,...1,1,1]. The right term of the product is a bit vector of N "1" bits, which can also be written as $2^{N-1}$. Therefore the compensation term is (a&c) << N - (a&c). The negative term is the same as (~a)|(~c) +1, with sign extension. This is shown in the first two rows in Figure 4, which is described in more detail below.

In the second stage 403, equal weight bits of elements b and d are grouped to form a binary number (also referred to as 'binary digits' or 'binary number pairs'). Each binary number sets a partial product row, such that one partial product is generated per binary number. As there are eight binary number (pairs), there are eight partial product rows. There are an additional three rows of partial products 451, 453, 455. The first 451 and second additional rows 453 are due to: the compensation for the (a&c) that was subtracted from each partial product row. The third additional row 455 is for increments that arise from the negated values which form the partial product row 455. In this manner, there are a total of 11 rows of partial products.

These first row 451 and the second row 453 form the compensation term, to compensate for the fact that each partial product has a bias of -(a&c) << i, when 'i' is the index of the row. The "1" at weight 0 in the first row 451 and the second row 453 add up to -(a&c). The (a&c) between bits 8-15 in the first row 451 correspond to the shifted term (a&c) << N. The bits in the eleventh row 455 are to hold the increments for the partial product rows that were 0 in the first scheme. These are now -(a&c), which using 2's complement may be written as ~(a&c)+1. The +1 term is placed in the final row. The bits in the partial products array may be moved as long as they stay in the same column, in some other examples. The arrangement of bits in Figure 4 is shown as an example only.

The binary numbers (formed by bits of elements b and d) will set the partial product row. When the binary number is (0,0) then the row is set to m_0 405. When the binary number is (1,0), then the row is set to m_1 407. When the binary number is (0,1), then the row is set of m_2 409. When the binary number is (1,1), then the row is set to m_3 411.

The partial product rows 457 are determined to be:

row 3 = m_0 (sign extended / padded with 1s),

row 4 = m_1 (sign extended / padded with 0s),

row 5 = m_2 (sign extended / padded with 0s),

row 6 = m_3 (sign extended / padded with 0s),

row 7 = m_1 (sign extended / padded with 0s),

row 8 = m_0 (sign extended / padded with 1s),

row 9 = m_3 (sign extended / padded with 0s),

row 10 = m_1 (sign extended / padded with 0s).

The eleven rows of partial products may be termed the partial products array.

In this manner, eleven rows 451, 453, 457, 455 of partial products are determined for the partial products. This is less than the number of partial products that are determined when splitting up the multiplication (as shown in Figure 2), but three more rows than the first scheme. As the second scheme does not pre-compute a+c, this may reduce the latency compared to the first scheme. In scenarios whereby timing constraints cannot be met without increasing the drive strength of gates (which increases their area), reducing the delay translates into an area reduction. This is because the drive strength (and therefore area) of the gates involved may be reduced.

The eleven rows 451, 453, 457, 455 of partial products are summed together to determine an output for the dot product between vector V1 and vector V2. Any suitable implementation may be used to perform the summation. For example, with a carry save adder and a carry propagate adder.

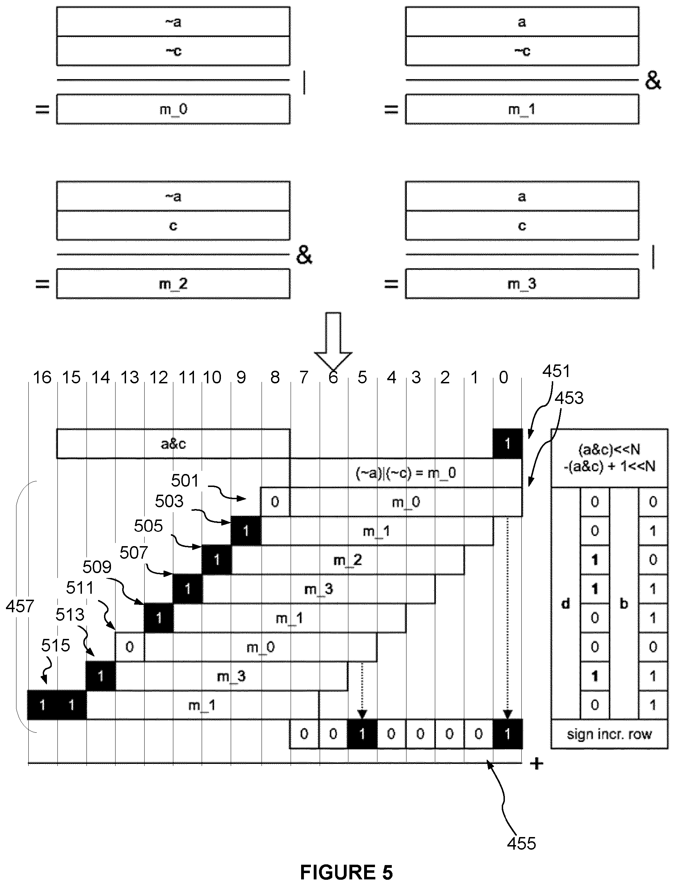

The sign extensions in the second row 453 and third to tenth rows 457 of Figure 4 may be summed together to reduce the number of bits. This is depicted in Figure 5.

Figure 5 shows a schematic representation of the second example of partial product generation for a dot product operation performed in hardware with the sign extensions summed together. The same labelling is used in Figure 5, as was used in Figure 4.

As shown in Figure 5, the sign extensions of the second row 453 to the tenth row 457 are summed together. Following the summing: the second row 453 is no longer sign extended, the third row 501 has a '0' as its ninth bit, the fourth row 503 has a '1' as its ninth bit, the fifth row 505 has a '1' as its ninth bit, the sixth row 507 has a '1' as its ninth bit, the seventh row 509 has a '1' as its ninth bit, the eight row 511 has a '0' as its ninth bit, the ninth row 513 has a '1' as its ninth bit, and the tenth 515 row has a '1' as its ninth and tenth bits. The tenth row 515 has both ninth and tenth bits (rather than only nine bits) due the summation of the sign extensions from the previous rows.

In Figure 5, the first row 451 and the eleventh row 455 (i.e., the sign increment row) are unchanged when compared to Figure 4.

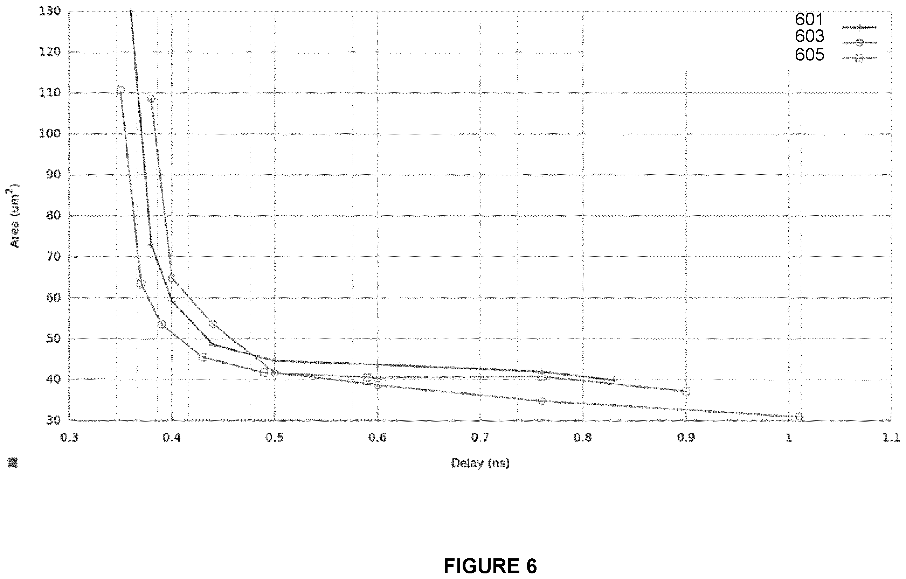

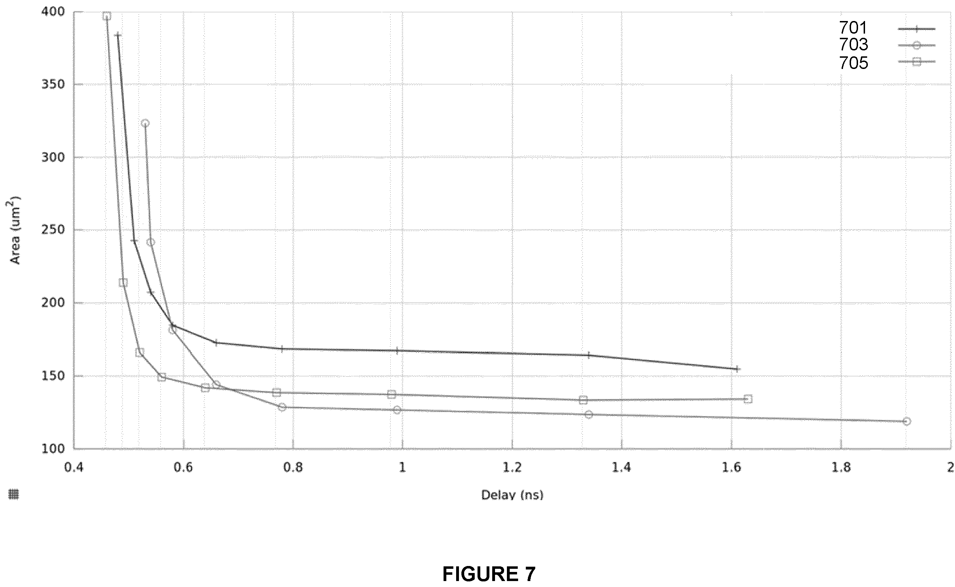

As described previously, the first and second schemes as described above have a number of advantages over other hardware implementations of computing dot products, such as the implementation described alongside Figure 2. Simulation results of computing the dot product according to: known hardware implementations (e.g., the implementation described alongside Figure 2), the first scheme (Figure 3) and the second scheme (Figure 4 and Figure 5) are graphically represented in Figures 6 and 7. The simulation results show that the first scheme and the second scheme have both area and time advantages over known hardware implementations.

Figure 6 shows a graphical representation of area-delay trade-offs for three different implementations for a dot product operation for 8-bit inputs. The graph has the time delay (i.e., the time to compute the dot product) on the x-axis in nanoseconds (ns), and has area (in hardware) that is used for the dot product in square micrometres ($\mu m^2$).

There is a first line 601 which is representative of a first implementation for performing the dot product operation. The first line 601 is associated with a known hardware implementation. This may be the implementation described in Figure 2. In the simulation graphically represented in Figure 6, a synthesis tool has determined a most suitable implementation (known implementation) to solve the dot product. There is a second line 603 which is associated with the first scheme, as described alongside Figure 3. There is a third line 605 which is associated with the second scheme, as described alongside Figures 4 and 5.

The graph of Figure 6 shows the area vs delay trade-off. Each of the lines 601, 603, 605 shows one implementation, which is synthesised for different time constraints between 0.35 ns and 1.05 ns. As shown in Figure 6, at least one of the first and second schemes (associated with the second line 603 and the third line 605) outperform the implementation associated with the first line 601 in all conditions. In particular, the first scheme (second line 603) is the best performing implementation when there is a less stringent time constraint (e.g., between 0.6 and 1ns). Stated differently, when higher time delays are acceptable (e.g., between 0.6 and 1ns), the first scheme (second line 603) outperforms the other two implementations as a smaller area is used for the dot product operation. The second scheme (third line 605) is the best performing implementation when there are more stringent time constraints (e.g., less than 0.5ns). Stated differently, when time delay is of particular importance (e.g., less than 0.5 ns), the second scheme (third line) 605 outperforms the other two implementations by using the smallest area in hardware for the dot product operation. The second scheme (third line 605) is also able to achieve the lowest time delay in the simulation, out of the three implementations (as low as 0.35ns). For a time delay of 0.5ns and above, the implementation associated with the first line 601 performs the worst of all three implementations.

Similar simulation results are achieved when the inputs are 16 bits in width/length, as shown in Figure 7.

Figure 7 shows a graphical representation of area-delay trade-offs for three different implementations for a dot product operation for 16-bit inputs. The graph has the time delay (i.e., the time to compute the dot product) on the x-axis in nanoseconds (ns), and has area (in hardware) that is used for the dot product in square micrometres ($\mu m^2$).

There is a first line 701 which is associated with a known hardware implementation. This may be the implementation described in Figure 2. In the simulation graphically represented in Figure 7, a synthesis tool has determined a most suitable implementation (known implementation) to solve the dot product. There is a second line 703 which is associated with the first scheme, as described alongside Figure 3. There is a third line 705 which is associated with the second scheme, as described alongside Figure 5.

The graph of Figure 7 shows the area vs delay trade-off. Each of the lines 701, 703, 705 shows one implementation, which is synthesised for different time constraints between 0.45 ns and 1.95 ns. As shown in Figure 7, at least one of the first and second schemes (associated with the second line 703 and the third line 705) outperform the implementation associated with the first line 701 in all conditions. In particular, the first scheme (second line 703) is the best performing implementation when there is a less stringent time constraint (e.g., between 0.7 and 1.9 ns). Stated differently, when higher time delays are acceptable (e.g., between 0.7 and 1.9 ns), the first scheme (second line 703) outperforms the other two implementations as a smaller area is used for the dot product operation. The second scheme (third line 705) is the best performing implementation when there are more stringent time constraints (e.g., less than 0.7ns). Stated differently, when time delay is of particular importance (e.g., less than 0.7 ns), the second scheme (third line) 705 outperforms the other two implementations by using the smallest area in hardware for the dot product operation. The second scheme (third line 705) is also able to achieve the lowest time delay in the simulation, out of the three implementations (as low as 0.45ns). For a time delay of 0.6ns and above, the implementation associated with the first line 701 performs the worst of all three implementations.

The examples described above, as part of the first scheme and the second scheme, have been associated with unsigned inputs. In some examples, a dot product between a signed input and an unsigned input, or between two signed inputs may be computed. In order to allow for at least one signed input, the implementations according to the first scheme and second scheme may be configured as follows.

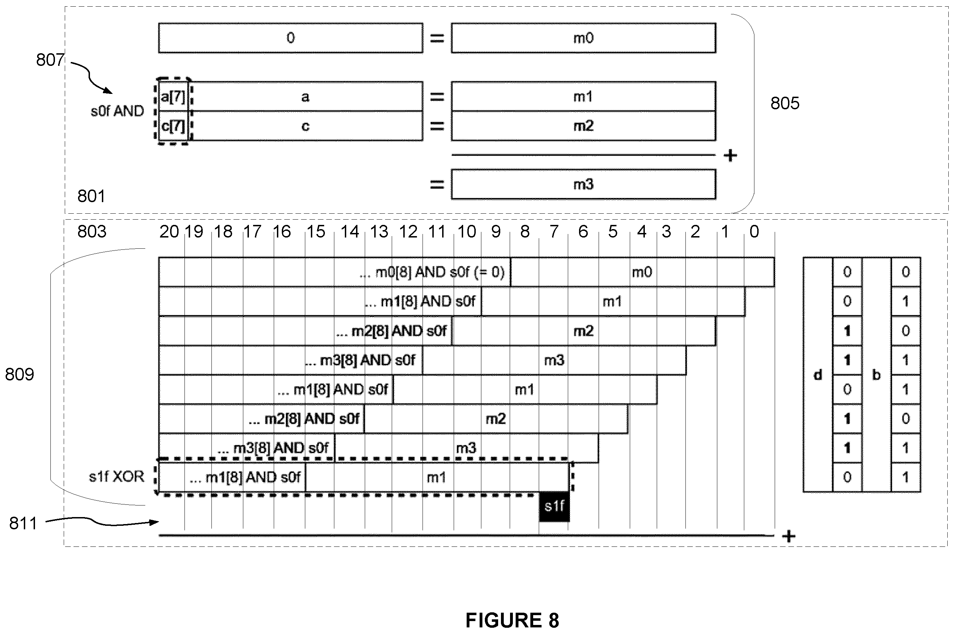

For the first scheme (e.g., associated with Figure 3), when the multiplicands (i.e., elements a and c of vector V1) are signed, the partial products array is modified by inverting the MSBs of each partial products row, inserting a sign extension of 1s above the most significant partial product row, and then adding an increment in a new partial products row at index n (i.e., +1 <<(n-1)). The increment (i.e., +1) is added at index n because it is to align with the MSB of the least significant partial product row, which is at index n, or 8 in this example. The most significant row is the row bottom of the array diagrams (e.g., in Figure 3 and Figure 5), that has been left shifted by the largest value. When the multipliers (i.e., the elements b and d of vector V2) are signed, the partial products array is modified by inverting the n significant bits of the most significant partial product row, inserting a sign extension of 1s above the most significant partial product row, and then adding an increment in a new row at index n-1 (i.e., +1<<(n-1). When both the multiplicands and multipliers are signed, then both of the transformations described above are applied. This is described in more detail alongside Figures 8 to 10.

For the second scheme (e.g., associated with Figures 4 and 5), when the multiplicands (i.e., elements a and c of vector V1) are signed, the (simplified) partial products array (from Figure 5) is modified by setting the new MSB of each row (which is 0 if the multiplier digits are (0,0) and 1 otherwise) to always be 0, and inverting the MSB of the multiplicand. The sign extension now begins one bit above the MSB of the most significant partial product row. When the multipliers (i.e., the elements b and d of vector V2) are signed, the significant bits (not including the sign extensions) of the most significant partial product row are inverted, and the increment that is added for this row is also inverted. In this manner, when the most significant binary number is (0,0), the corresponding bit on the sign increment row will be 0, otherwise it will be 1. The additional partial product row with (a&c)<<n (e.g., the first row 451) is removed. When both the multipliers and multiplicands are signed, then both of the transformations described above are applied.

Figure 8 shows a schematic representation of a first example of partial product generation for a dot product operation for an optionally signed input performed in hardware. Figure 8 shows an example with a full sign extension for each partial product row. The example of Figure 8 follows on from the first scheme described in Figure 3, wherein a pre-computation of a+c is determined.

In the following example, control inputs are used to indicate whether at least one of the multiplier or multiplicand are signed (or unsigned). In this example, 's0f' and 's1f' are control inputs. The use of control inputs such as 's0f' and 's1f' allow the reuse of hardware for both signed and unsigned dot product inputs. In other examples, hardware may be used that is statically signed. In this context, a static signing means that, where there are no control inputs like s0f and s1f to allow both signed and unsigned input, the modifications described as follows are applied. Stated differently, the modifications are not dependent on control inputs like s0f or s1f.

In the example of Figure 8, the two control inputs are s0f and s1f, whereby s0f is associated with the multiplicand (e.g., a and c) and s1f is associated with the multiplier (e.g., b and d). In other examples, any suitable name for the control inputs may be given (e.g., first control input, second control input).

When the control input s0f = 0, this indicates that the multiplicand is unsigned. When the control input s0f = 1, this indicates that the multiplicand is signed. For a signed multiplicand (i.e., s0f =1), then each multiplicand is sign extended. This will be described in more detail below.

When the control input s1f = 0, this indicates that the multiplier is unsigned. When the control input s1f = 1, this indicates that the multiplier is signed. For a signed multiplier (i.e., s1f =1), then the most significant partial product is inverted, and then add $+1<<(n-1)$. This is described in more detail below.

The dot product operation of Figure 8 is split into a first stage 801 and a second stage 803. The dot product operation of Figure 8 is between the same vectors (V1 and V2) as described above for Figure 3 (i.e., the same binary encoded integers are comprised in the vectors). In the first stage 801, the multiplicands a and c are modified based on the control input (s0f). The four options 805 for partial products are modified as follows: 0 is modified to m0, a is modified to m1, c is modified to m2, and a+c is modified to m3. The value for m3 may be pre-computed, as part of the first stage. In this manner, the value for m3 is computed before the partial product rows are generated as part of the second stage 803.

In the example of Figure 8, with an 8-bit multiplicand, option a and option c are each sign extended by 1 bit when the multiplicand is signed (i.e., when s0f = 1). This modification defines the options m1 and m2 respectively. As depicted in Figure 8, a and c are sign extended with s0f to "s0f AND a[7]" and "s0f AND c[7]", which are shown with label 807. Stated differently, there is a Boolean AND operation between the MSBs of the options and the control bit s0f .

When the multiplicands are signed (i.e., control bit s0f = 1), then all of the rows in the partial products array are also sign extended with the MSB of the option that is selected for that row (i.e., one of: m0, m1, m2 or m3). Due to this, using zero ('0') indexing, there is a Boolean AND operation between the ninth bit of the option that is selected (e.g., m0[8], m2[8]) and the control bit s0f. This will be described in more detail below.

In this manner, if s0f is 1, all multiplicands are signed. As the partial products will be 9 bits wide, both multiplicands are sign-extended to 9 bits before they are selected as the value of the partial product. These sign extended multiplicands are then added to produce the sum of multiplicands (i.e., m1 + m2 = m3). The 9th bit of the selected value, be it the first multiplicand (m1), second multiplicand (m2) or sum of multiplicands (m3), may then be interpreted as having a negative sign, whereas the 8 less significant bits all have a positive sign. The selected value is left shifted by the corresponding weight and sign extended as needed to construct the array of partial products.

When s1f is 1, all multipliers are signed. This means that the most significant bit of each multiplier is negative. This only affects the most significant shared partial product, which should then be negated by inverting all bits (including the sign extension) and adding 1. As the first 7 bits of this row would always be 0, this is equivalent to inverting all but the first 7 bits of this row, and adding $s1f * 2^7$.

In the second stage 803, equal weight bits of elements b and d are grouped to form digits. Each digit sets a partial product row, such that one partial product is generated per digit. The partial product for each row is set based on the four options. In this example, the following partial product rows are generated:

Row 1: digit is (0,0) which sets row 1 to m0. Row 1 is sign extended with m0[8] AND s0f.

Row 2: digit is (1,0) which sets row 2 to m1. Row 2 is sign extended with m1[8] AND s0f.

Row 3: digit is (0,1) which sets row 3 to m2. Row 3 is sign extended with m2[8] AND s0f.

Row 4: digit is (1,1) which sets row 4 to m3. Row 4 is sign extended with m3[8] AND s0f.

Row 5: digit it (1,0) which sets row 5 to m1. Row 5 is sign extended with m1[8] AND s0f.

Row 6: digit is (0,1) which sets row 6 to m2. Row 6 is sign extended with m2[8] AND s0f.

Row 7: digit is (1,1) which sets row 7 to m3. Row 7 is sign extended with m3[8] AND s0f.

Row 8: digit is (1,0) which sets row 8 to m1. Row 8 is sign extended with m1[8] AND s0f.

For row 8, there is a bitwise XOR operation between the control bit s1f and the row. The dashed line around the bits of row 8 indicate that a certain operation is applied to these bits. In the instance of row 8, the dashed line indicates that a bitwise XOR operation between s1f and the row of bits is applied. Stated differently, when s1f = 1 (i.e., signed multiplier), the bits of row 8 are all inverted. When s1f = 0 (unsigned), the bits are unchanged.

The indexing x[i] means that from the bit vector x, the bit with index i is used, using 0-indexing. Stated differently, x[i] gives the "i+1"th bit of x (the +1 is because of 0-indexing). In the example of Figure 8, m1[8] gives the bit with index 8 of the value m1, which is the 9th bit of m1. The "..." notation in Figure 8 that is shown to the left of the MSB terms of each row indicates that this bit value s0f AND m0/1/2/3[8] is repeated for the full width of the sum (i.e. sign extended).

As shown in rows 1 to 8, the sign of the selected multiplicand is extended when s0f is 1. When s1f is 1, the final row (row 8) is inverted and an increment bit is added to an additional row (i.e., a row 9) 811. The inversion in row 8 when s1f = 1 is depicted with an equivalent bitwise XOR operation.

The rows of partial products 809, 811 generated above may be termed the partial products array. The partial products 809, 811 are then summed together in order to give the result of the dot product between vector v1 and vector v2. Any suitable implementation may be used to sum together the rows.

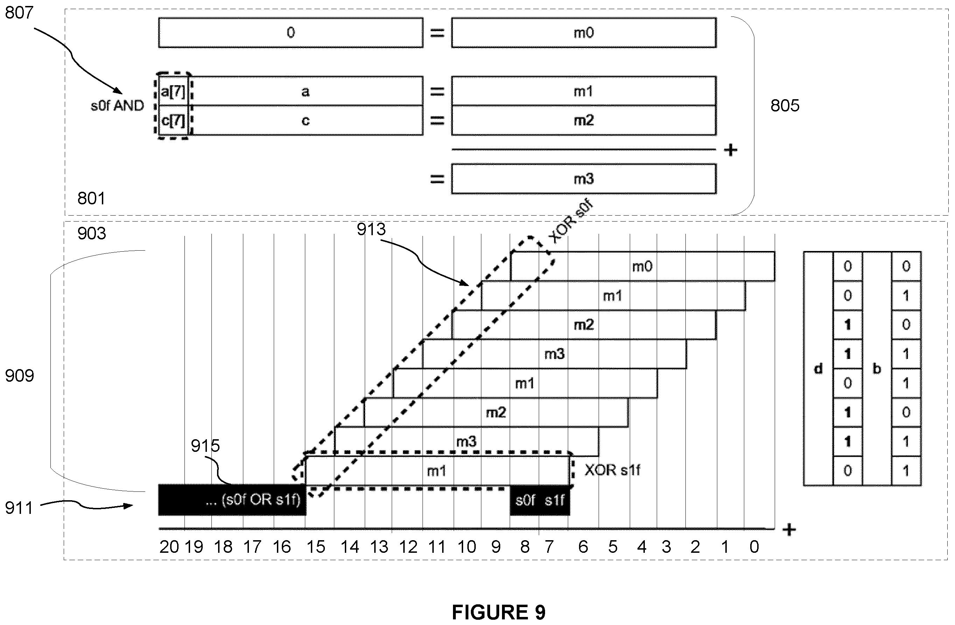

The sign extensions in the partial products array of Figure 8 means that many bits in the array that were previously always 0 in an unsigned implementation may now be non-zero. Due to this, these bits of the sign extensions will be considered in the addition of the partial products. In order to avoid this, two numbers are added to the array which cancel each other out, and have the outcome of removing the sign extensions. This is shown in Figure 9.

Figure 9 shows a schematic representation of the first example of partial product generation for a dot product operation for an optionally signed input performed in hardware with the sign extensions removed. As Figure 9 is relevant to the example depicted in Figure 8, common labelling will be used for the two figures. In Figure 9, there is a first stage 801 which is the same as the first stage 801 of Figure 8. In a second stage 903 of Figure 9, there are differences to the second stage 803 of Figure 8, which will be described in more detail below.

In order to remove the sign extensions (e.g., from the array 809 generated in Figure 8), the following is performed. When s0f = 1, add +1<<n and -1<<n to the partial products array. The +1<<n will be 1 extra bit. The -1<<n is a string of 1s, which may be serially added to sign extensions. Overall, this works out to: invert the MSBs of the multiplicands when s0f = 1, wherein there will be one sign extension remaining if one of s0f or s1f =1.

In this manner, the sign bit of the most significant partial product may be determined by XOR'ing (i.e. conditionally inverting) it with both s0f and s1f. The sign extension will be all 1's if one or both of s0f and s1f are 1. This is equivalent to s0f OR s1f, which indicates whether the result will be signed or not. In each row of the partial products, s0f is XOR'ed with the same bit (MSB) of the selected value in each row of partial products, shown in a dashed box with label 913.

As shown in Figure 9, the first 8 rows 909 in the array have 9 non-zero bits each. The non-zero bits in the last row (row 8) are inverted when s1f is 1 (i.e., when multipliers b and d are signed). The MSB of the first 8 rows 909 will also be inverted when s0f is 1 (i.e., when multiplicands a and c are signed). When there is a ninth row 911 (due to s0f =1, or s1f = 1), there is an s1f bit at index 7. Besides the s1f bit at index 7, the ninth row 911 also contains s0f at index 8, as well as the sign extension with (s0f OR s1f) from index 16 (i.e., 2N) upwards (shown with label 915).

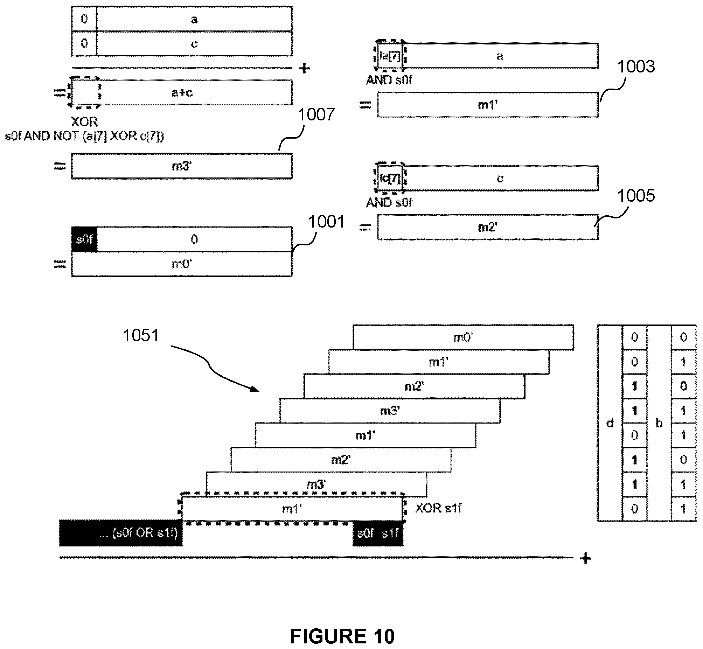

Figure 10 shows a schematic representation of a second example of partial product generation for a dot product operation for a signed input performed in hardware. In Figure 10, four options for values for partial products are determined based on the multiplicands a and c. The four options are labelled: m0' 1001, m1' 1003, m2' 1005, and m3' 1007.

Compared to one or more of the previous examples described (e.g., Figure 9), an optimisation may be made based on the observation that s0f is XOR'ed with the same bit of the selected value in each row of partial products (e.g., label 913 in Figure 9). This means that the XOR may already be applied to each possible value (i.e. 0, either multiplicand (a or c), or the sum of multiplicands (a+c)) before they are selected in each row of partial products with the multiplier bits. In particular, this includes XOR'ing the extended sign bit of each multiplicand, the sign bit of the sum of multiplicands, and the "sign bit" of a 9-bit value of 0 with control bit s0f. This means the 8 XOR gates used previously (e.g., in Figure 9) in the partial products array are able to be replaced with 3 XOR gates. Four XOR gates are not required as a constant 0 does not infer an XOR gate. In this manner, the three XOR gates would be used for a, c, and a+c to determine m1, m2 and m3 respectively.

Additionally, or alternatively, optimisations may be made using Boolean equivalences. For example, the sign extension of a multiplicand a equals a[7] AND s0f. XOR'ing this with s0f results in (a[7] AND s0f) XOR s0f, which is equivalent to s0f AND NOT a[7] (shown with label 1009 in Figure 10). Overall, this replaces an XOR gate with a NOT gate, for both multiplicands a and c. A NOT gate is less computationally expensive than an XOR gate. However, because the original sign extension a[7] AND s0f is still used for both multiplicands as the input to their sum, an additional AND gate is also used.

Another Boolean equivalence for an optimisation is that instead of sign extending the multiplicands (a and c), followed by adding them and then XOR'ing the top bit of the result with s0f, the 8-bit multiplicands may instead be summed without sign extension. Then, the carry bit of this result is XOR'ed with s0f AND NOT (a[7] XOR c[7]). This saves two AND gates for the sign extension pre-addition (of a+c) and one XOR gate for the inversion with s0f, at the cost of one AND and one NOT gate. Overall, this saves an AND gate and introduces a NOT gate. A NOT gate is less computationally expensive than an AND gate.

In this manner, "XOR s0f" is applied when the multiplicand options are generated. This is then used to determine the MSB of option 'm3' more efficiently. This is because, in previous examples, multiplicands a and c were sign extended before being summed together. In the example of Figure 10, a and c are summed as unsigned, and s0f is used to determine the MSB.

As shown in Figure 10, the array of partial products 1051 is the same as in Figure 9 except the XOR gates that were previously used at the MSB of each row in Figure 9 have now been removed. This optimisation saves on the number of logic gates used, as described above.

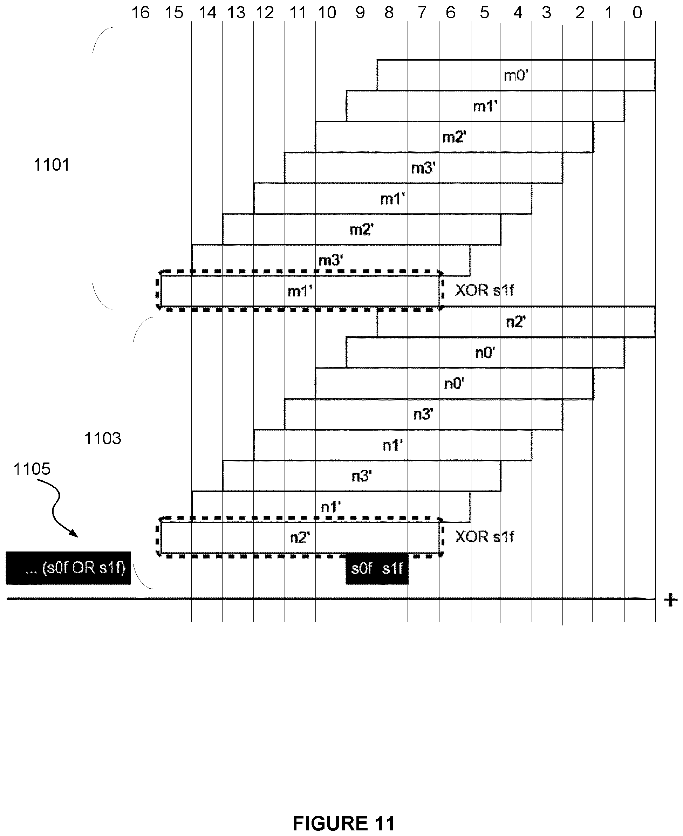

Figure 11 shows a schematic representation of partial product generation for a four-element dot product operation performed in hardware.

A dot product between two input vectors that each comprise four elements (which may be termed a 4-deep dot product), may lead to the following formulation: a*b + c*d + e*f + g*h. The examples described above may also be applied to such a scenario. The formulation a*b + c*d + e*f + g*h may be split into: a first dot product for a*b + c*d and second dot product for e*f + g*h, and be computed separately. Partial product generation for the first dot product is labelled as 1101 in Figure 11, while partial product generation for the second dot product is labelled as 1103.

In Figure 11, a first pair of multiplicands (say a and c) are used to generate the four options m0' through m3' (e.g., in the same manner as described for Figure 10). Using this approach, a second pair of multiplicands (say e and g) generates the options n0' through n3'. For simplicity, the multiplier bits are not shown in Figure 11.

Since the last row of partial products for 1101 and 1103 would be the same, a last row of the first dot product 1101 is removed (not shown) and a last row 1105 of the second dot product 1103 is a left-shifted (by an index of 1). The last row of partial products for 1101 and 1103 would be the same because both rows rely on the control inputs s0f and s1f, and not on the multiplicands or multipliers associated with 1101 or 1103. As s0f and s1f are the same for both of these rows, both rows are the identical. Adding two identical rows together is equivalent to multiplying one of the rows by 2, which in binary arithmetic is equivalent to left shifting this row by 1 bit position. When compared to Figure 10, the final row 1105 of Figure 11 is the same but has been left-shifted by 1. In Figure 11, (s0f OR s1f) has been shifted from index 16 and above, to index 17 and above. In Figure 11, (s0f s1f) has been shifted from indexes 8 and 9 to indexes 9 and 10.

In this manner, when there is a 4-deep dot product, the number of additional rows may be reduced by 1. Reducing the number of rows means that the time delay may be lowered and/or hardware area being used may be reduced.

In some examples, the hardware implementation of the first scheme is applied to higher radices. Using higher radices in recoding enables a further reduction in the number of generated partial product rows for a single two-dimensional dot product. In some examples, rather than the radix-2 scheme described above, a radix-4 scheme or a hybrid radix-2 radix-4 scheme is used. A hybrid radix-2 radix-4 scheme comprises alternating between radix-2 and radix-4 recoding. The radix-4 scheme is comparable to a Booth radix-16, and the hybrid radix-2 radix-4 is comparable to Booth radix-8 with a reduced number of partial products and reduced widths of partial products. This is particularly beneficial in the implementation of dot products with 'intermediate-size' multiplier widths. The hybrid radix-2 radix-4 is beneficial for intermediate-widths that are wide enough to make up for its larger overhead but not wide enough to make up for the overhead of the radix-4 scheme.

In some examples, the hardware implementation of the first scheme is applied to dot products of higher dimensionality (i.e., involving a larger number of multiplications). Dot products of higher dimensionality may be handled by pairing multipliers and generating partial products for each pair of multiplications, much in the same way partial multiplications generate their own partial products to be summed together in the conventional approach. However, 'sharing' partial products for more than two multiplications (i.e., by grouping multiplier digits) offers the possibility to further reduce the number of partial products in a more straightforward manner. The radix-2 scheme (e.g., as per Figure 3) may be extended to three dimensions by producing one partial product for every three digits of respective multipliers. In some examples, this may extend to four dimensions and beyond. The further reduction of number of partial products by adding e.g., 3 or 4 multiplicands together for higher-dimension dot products, makes the first scheme more competitive against other schemes, such as Booth radix-8 and Booth radix-16.

For example, for a radix-4 scheme, elements (b,d) may be recoded into a sequence of digits of (b,d) as (x,y), where digits x and y are in the set -2,-1,0,1,2. The recoding of a and c is independent, each following the standard Booth radix-4 recoding. This would mean that pre-computing of a+c, 2a+c, 2a-c, a-c, a+2c, and a-2c would be performed before the partial products were generated. For a hybrid radix-2 radix-4 scheme, elements (b,d) may be recoded into a sequence of alternating digits of the form (u,v) and (x,y), where digits u and v are in the digit sets 0,1 and -2,-1,0,1,2, and the digits x and y are in the digit set -2,-1,0, 1, 2 and 0,2 respectively. The recoding of a and c is independent, each following a modified Booth radix-4 recoding such that one bit is left unchanged for every group of 3 bits. This is because the Booth encoding of the preceding 2 bits may generate a carry, the value of this bit may be altered such that when the lone bit is high and the Booth encoding carries, then the lone bit becomes low. The carry consumed by the succeeding 2 bits is only high in that situation. This would mean that pre-computing of a+c, a-c, a+2c, and a-2c would be performed before the partial products were generated. The other options would be derived using a, c and optional shifts and negations (in any suitable way).

The example implementations described above have a number of applications, and may be utilised anywhere in a computing system that requires the output of a*b + c*d. The flexibility of the implementations described above means that input vectors with varying widths may be used. For example, a width between 4 and 64, and potentially higher in some applications. In the examples described above, the widths of the input multiplicands and multiplier are the same. In other examples, the schemes described above may equally be applied to cases whereby the multiplier have width N and the multiplicands have a different width M. In some examples, with input a, b, c and d, each of these elements may have a different width.

One or more of the examples described above, in relation to the first and second schemes, describe the grouping or pairing of bits of the elements of the multiplier (e.g., b and d) to form a binary number. In many of the examples described above, equal weight bits of the elements of the multiplier are grouped. In other examples, non-equal weight bits are grouped to form the binary number. For example, weight i of b, and weight i+1 for d may be grouped to form a binary number (which will then be used to select a value for a partial product row).

In another example, partial product generation for a three-element dot product operation may be performed in hardware. A dot product between two input vectors that each comprise three elements may lead to the following formulation: a*b+c*d+e*f, In this example, the bits of the elements of the multiplier (e.g., b, d and f) are grouped to form a binary number. The sums a+c, a+e, c+e and a+c+e are precomputed and one of 8 options (0, a, c, e, a+c, a+e, c+e and a+c+e) is picked based on (b,d,f) digits of the binary number.

Some example applications for the schemes described above include vector/matrix multiplication, whereby the example implementations can perform two products at once, and in neural networks for weight-value multiplications.

One or more of the previous examples have been described with reference to the dot product. It should be understood that the examples are applicable to any multiplication operation formulated as a*b + c*d. Stated differently, any two multiplication operations that are subsequently added together is considered to be analogous to a dot product operation. Many of the examples described have used two vectors as inputs, wherein the dot product operation is between the two vectors. It should be understood that the above-described implementations are not limited to such a dot product, and is suitable for any application that is to compute a*b + c*d.

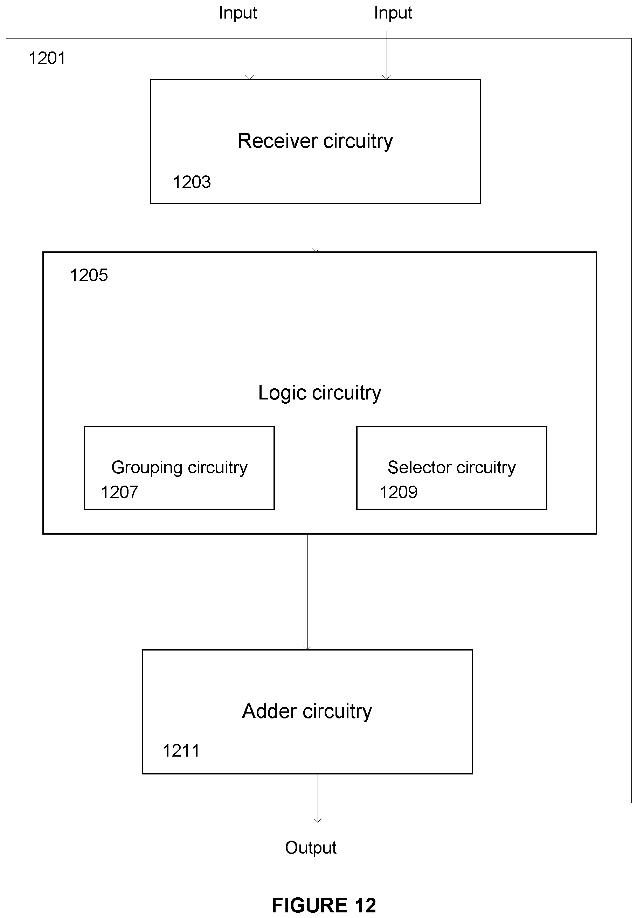

Figure 12 shows a schematic representation of a hardware module. The hardware module may, for example, be comprised in a graphics processing unit, or another suitable processing unit.

The hardware module 1201 comprises receiver circuitry 1203 which may be configured to receive any number of inputs. For example, input vectors, input numbers, arrays, etc. In the example of Figure 12, the receiver circuitry is receiving two inputs. The receiver circuitry 1203 may be fixed-function hardware circuitry. The receiver circuitry 1203 is connected to logic circuitry 1205 of the hardware module 1201. The logic circuitry 1205 may be fixed-function hardware circuitry. The logic circuitry 1205 comprises grouping circuitry 1207 and selector circuitry 1209. The logic circuitry 1205 (and/or the grouping circuitry 1207 and the selector circuitry 1209) is connected to adder circuitry 1211 of the hardware module 1201. The adder circuitry 1211 may be fixed-function hardware circuitry. The adder circuitry is configured to provide an output, or a plurality of outputs. The output may be provided to another part of the hardware module 1201 (not shown), or elsewhere.

The hardware module 1201 (and the circuitry comprised in the hardware ) may be configured to perform one or more of the examples described above. For example, the receiver circuitry 1203 may be configured to perform: receiving an input of a first vector and a second vector, each of the first and second vectors comprising two elements, wherein each element is a binary encoded integer. The logic circuitry 1205 may be configured to perform: generating an array of partial products for a dot product operation between the first vector and the second vector, the array of partial products comprising a number of, N, rows of bits. The grouping circuitry 1207 may be configured to perform: grouping equal weight bits of the two elements of the second vector into binary numbers, wherein each of the binary numbers is associated with a respective row of the N rows of bits. The selector circuitry 1209 may be configured to perform: selecting a value for a partial product for each of the N rows of bits based on the binary number that is associated with the respective row, such that one partial product is generated per binary number. The adder circuitry 1211 may be configured to perform: adding the N rows of bits together to compute an output associated with the dot product operation between the first and second vectors. It should be understood that this is an example only. In other examples, the hardware module may be configured to perform more, or fewer, of the operations described above.

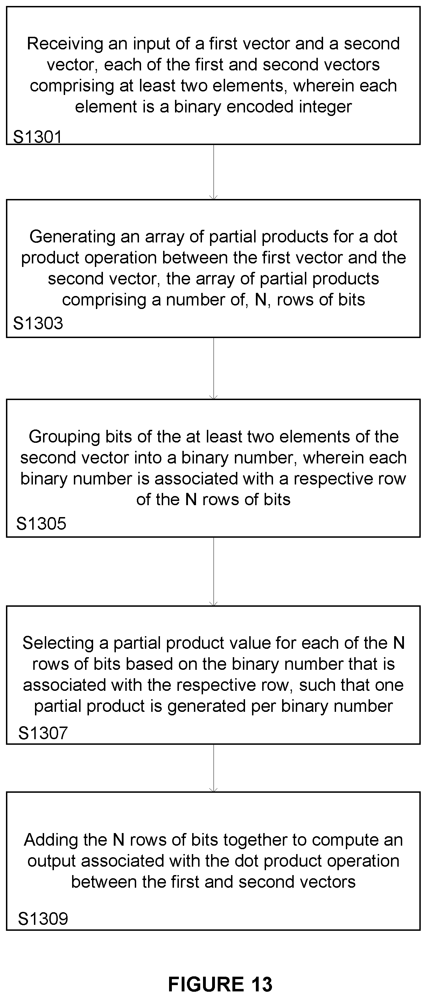

Figure 13 shows an example method flow. The method flow may be performed by a hardware module. In some examples, the hardware module may be a processing unit, such as a graphic processing unit (or graphics processing system), or central processing unit. In some examples, a graphics processing unit may comprise the hardware module. The hardware module can comprise circuitry configured to perform the method of Figure 13.

In S1301, the method comprises: receiving an input of a first vector and a second vector, each of the first and second vectors comprising at least two elements, wherein each element is a binary encoded integer.

In S1303, the method comprises: generating an array of partial products for a dot product operation between the first vector and the second vector, the array of partial products comprising a number of, N, rows of bits.

In S1305, the method comprises: grouping bits of the at least two elements of the second vector into a binary number, wherein each binary number is associated with a respective row of the N rows of bits.

In S1307, the method comprises: selecting a partial product value for each of the N rows of bits based on the binary number that is associated with the respective row, such that one partial product is generated per binary number.

In S1309, the method comprises: adding the N rows of bits together to compute an output associated with the dot product operation between the first and second vectors.

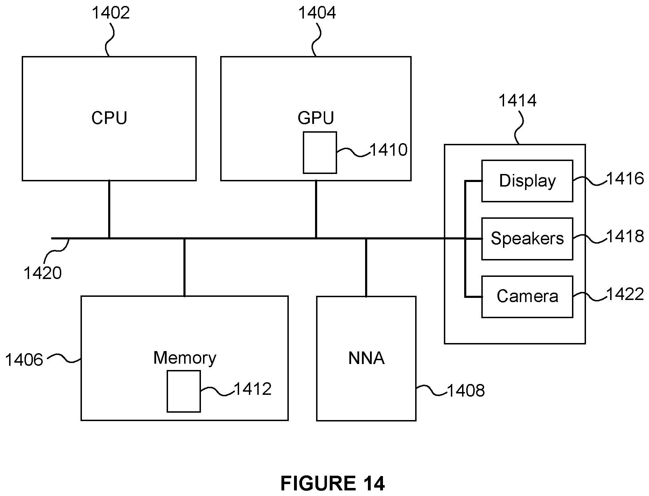

Figure 14 shows a computer system in which the graphics processing systems described herein may be implemented. The computer system comprises a CPU 1402, a GPU 1404, a memory 1406, a neural network accelerator (NNA) 1408 and other devices 1414, such as a display 1416, speakers 1418 and a camera 1422. A processing block 1410 is implemented on the GPU 1404. In other examples, one or more of the depicted components may be omitted from the system, and/or the processing block 1410 may be implemented on the CPU 1402 or within the NNA 1408. The components of the computer system can communicate with each other via a communications bus 1420. A store 1412 is implemented as part of the memory 1406.

The hardware module described herein may be embodied in hardware on an integrated circuit. The hardware module described herein may be configured to perform any of the methods described herein. The algorithms and methods described herein could be performed by one or more processors executing code that causes the processor(s) to perform the algorithms/methods. Examples of a computer-readable storage medium include a random-access memory (RAM), read-only memory (ROM), an optical disc, flash memory, hard disk memory, and other memory devices that may use magnetic, optical, and other techniques to store instructions or other data and that can be accessed by a machine.

The terms computer program code and computer readable instructions as used herein refer to any kind of executable code for processors, including code expressed in a machine language, an interpreted language or a scripting language. Executable code includes binary code, machine code, bytecode, code defining an integrated circuit (such as a hardware description language or netlist), and code expressed in a programming language code such as C, Java or OpenCL. Executable code may be, for example, any kind of software, firmware, script, module or library which, when suitably executed, processed, interpreted, compiled, executed at a virtual machine or other software environment, cause a processor of the computer system at which the executable code is supported to perform the tasks specified by the code.

A processor, computer, or computer system may be any kind of device, machine or dedicated circuit, or collection or portion thereof, with processing capability such that it can execute instructions. A processor may be or comprise any kind of general purpose or dedicated processor, such as a CPU, GPU, NNA, System-on-chip, state machine, media processor, an application-specific integrated circuit (ASIC), a programmable logic array, a field-programmable gate array (FPGA), or the like. A computer or computer system may comprise one or more processors.

It is also intended to encompass software which defines a configuration of hardware as described herein, such as HDL (hardware description language) software, as is used for designing integrated circuits, or for configuring programmable chips, to carry out desired functions. That is, there may be provided a computer readable storage medium having encoded thereon computer readable program code in the form of an integrated circuit definition dataset that when processed (i.e. run) in an integrated circuit manufacturing system configures the system to manufacture a hardware module configured to perform any of the methods described herein, or to manufacture a hardware module comprising any apparatus described herein. An integrated circuit definition dataset may be, for example, an integrated circuit description.

Therefore, there may be provided a method of manufacturing, at an integrated circuit manufacturing system, a hardware module as described herein. Furthermore, there may be provided an integrated circuit definition dataset that, when processed in an integrated circuit manufacturing system, causes the method of manufacturing a hardware module to be performed.

An integrated circuit definition dataset may be in the form of computer code, for example as a netlist, code for configuring a programmable chip, as a hardware description language defining hardware suitable for manufacture in an integrated circuit at any level, including as register transfer level (RTL) code, as high-level circuit representations such as Verilog or VHDL, and as low-level circuit representations such as OASIS (RTM) and GDSII. Higher level representations which logically define hardware suitable for manufacture in an integrated circuit (such as RTL) may be processed at a computer system configured for generating a manufacturing definition of an integrated circuit in the context of a software environment comprising definitions of circuit elements and rules for combining those elements in order to generate the manufacturing definition of an integrated circuit so defined by the representation. As is typically the case with software executing at a computer system so as to define a machine, one or more intermediate user steps (e.g. providing commands, variables etc.) may be required in order for a computer system configured for generating a manufacturing definition of an integrated circuit to execute code defining an integrated circuit so as to generate the manufacturing definition of that integrated circuit.

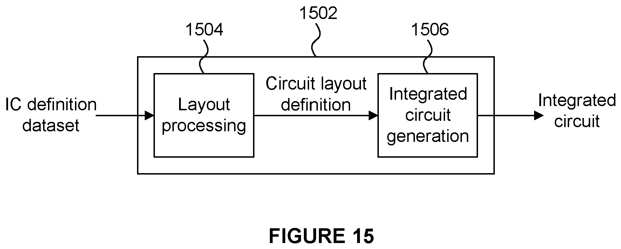

An example of processing an integrated circuit definition dataset at an integrated circuit manufacturing system so as to configure the system to manufacture a hardware module will now be described with respect to Figure 15.

Figure 15 shows an example of an integrated circuit (IC) manufacturing system 1502 which is configured to manufacture a hardware module (e.g., GPU) as described in any of the examples herein. In particular, the IC manufacturing system 1502 comprises a layout processing system 1504 and an integrated circuit generation system 1506. The IC manufacturing system 1502 is configured to receive an IC definition dataset, process the IC definition dataset, and generate an IC according to the IC definition dataset. The processing of the IC definition dataset configures the IC manufacturing system 1502 to manufacture an integrated circuit embodying a hardware module (e.g., a GPU) as described in any of the examples herein.

The layout processing system 1504 is configured to receive and process the IC definition dataset to determine a circuit layout. Methods of determining a circuit layout from an IC definition dataset are known in the art, and for example may involve synthesising RTL code to determine a gate level representation of a circuit to be generated, e.g. in terms of logical components (e.g. NAND, NOR, AND, OR, MUX and FLIP-FLOP components). A circuit layout can be determined from the gate level representation of the circuit by determining positional information for the logical components. This may be done automatically or with user involvement in order to optimise the circuit layout. When the layout processing system 1504 has determined the circuit layout it may output a circuit layout definition to the IC generation system 1506. A circuit layout definition may be, for example, a circuit layout description.

The IC generation system 1506 generates an IC according to the circuit layout definition, as is known in the art. For example, the IC generation system 1506 may implement a semiconductor device fabrication process to generate the IC, which may involve a multiple-step sequence of photo lithographic and chemical processing steps during which electronic circuits are gradually created on a wafer made of semiconducting material. The circuit layout definition may be in the form of a mask which can be used in a lithographic process for generating an IC according to the circuit definition. Alternatively, the circuit layout definition provided to the IC generation system 1506 may be in the form of computer-readable code which the IC generation system 1506 can use to form a suitable mask for use in generating an IC.

The different processes performed by the IC manufacturing system 1502 may be implemented all in one location, e.g. by one party. Alternatively, the IC manufacturing system 1502 may be a distributed system such that some of the processes may be performed at different locations, and may be performed by different parties. For example, some of the stages of: (i) synthesising RTL code representing the IC definition dataset to form a gate level representation of a circuit to be generated, (ii) generating a circuit layout based on the gate level representation, (iii) forming a mask in accordance with the circuit layout, and (iv) fabricating an integrated circuit using the mask, may be performed in different locations and/or by different parties.

In other examples, processing of the integrated circuit definition dataset at an integrated circuit manufacturing system may configure the system to manufacture a hardware module without the IC definition dataset being processed so as to determine a circuit layout. For instance, an integrated circuit definition dataset may define the configuration of a reconfigurable processor, such as an FPGA, and the processing of that dataset may configure an IC manufacturing system to generate a reconfigurable processor having that defined configuration (e.g. by loading configuration data to the FPGA).

In some embodiments, an integrated circuit manufacturing definition dataset, when processed in an integrated circuit manufacturing system, may cause an integrated circuit manufacturing system to generate a device as described herein. For example, the configuration of an integrated circuit manufacturing system in the manner described above with respect to Figure 15 by an integrated circuit manufacturing definition dataset may cause a device as described herein to be manufactured.

In some examples, an integrated circuit definition dataset could include software which runs on hardware defined at the dataset or in combination with hardware defined at the dataset. In the example shown in Figure 15, the IC generation system may further be configured by an integrated circuit definition dataset to, on manufacturing an integrated circuit, load firmware onto that integrated circuit in accordance with program code defined at the integrated circuit definition dataset or otherwise provide program code with the integrated circuit for use with the integrated circuit.

The implementation of concepts set forth in this application in devices, apparatus, modules, and/or systems (as well as in methods implemented herein) may give rise to performance improvements when compared with known implementations. The performance improvements may include one or more of increased computational performance, reduced latency, increased throughput, and/or reduced power consumption. During manufacture of such devices, apparatus, modules, and systems (e.g. in integrated circuits) performance improvements can be traded-off against the physical implementation, thereby improving the method of manufacture. For example, a performance improvement may be traded against layout area, thereby matching the performance of a known implementation but using less silicon. This may be done, for example, by reusing functional blocks in a serialised fashion or sharing functional blocks between elements of the devices, apparatus, modules and/or systems. Conversely, concepts set forth in this application that give rise to improvements in the physical implementation of the devices, apparatus, modules, and systems (such as reduced silicon area) may be traded for improved performance. This may be done, for example, by manufacturing multiple instances of a module within a predefined area budget.

The applicant hereby discloses in isolation each individual feature described herein and any combination of two or more such features, to the extent that such features or combinations are capable of being carried out based on the present specification as a whole in the light of the common general knowledge of a person skilled in the art, irrespective of whether such features or combinations of features solve any problems disclosed herein. In view of the foregoing description it will be evident to a person skilled in the art that various modifications may be made within the scope of the invention.

**Claims**

1. A hardware module for performing dot product operations, the hardware module comprising:

> receiver circuitry configured to perform: receiving an input of a first vector and a second vector, each of the first and second vectors comprising at least two elements, wherein each element is a binary encoded integer;
> logic circuitry configured to perform: generating an array of partial products for a dot product operation between the first vector and the second vector, the array of partial products comprising a number of, N, rows of bits, wherein the logic circuitry comprises:

>> grouping circuitry configured to perform: grouping bits of the at least two elements of the second vector into a binary number, wherein each binary number is associated with a respective row of the N rows of bits; and
>> selector circuitry configured to perform: selecting a partial product value for each of the N rows of bits based on the binary number that is associated with the respective row, such that one partial product is generated per binary number; and
>> adder circuitry configured to perform: adding the N rows of bits together to compute an output associated with the dot product operation between the first and second vectors.

2. The hardware module of claim 1, wherein equal weight bits of the at least two elements of the second vector are grouped to form the binary number.

3. The hardware module of claim 1 or claim 2, wherein the logic circuitry is further configured to perform:

> determining a plurality of options that are selectable for the value of the partial products in each of the N rows of bits, wherein the determining of the plurality of options is based on the at least two elements of the first vector, and wherein the selector circuitry is further configured to perform: for each of the N rows of bits, using the binary number associated with the respective row to select an option from the plurality of options for the value of the partial product of the respective row; and
> computing a summation of two elements of the at least two elements of the first vector to compute a sum, wherein the sum is one of the plurality of options, wherein the computing of the sum is performed before the generating of the partial products.

4. The hardware module of claim 3, wherein the binary number is a two bit number, and the logic circuitry is further configured to perform:

> when two bits of the binary number are 0, selecting a first option of the plurality of options for the corresponding partial product, wherein the first option is a string of zeros;
> when a first bit of the binary number is 1 and a second bit of the binary number is 0, selecting a second option of the plurality of options for the corresponding partial product, wherein the second option is associated with a first element of the two elements of the first vector;
> when the first bit of the binary number is 0 and the second bit of the binary number is 1, selecting a third option of the plurality of options for the corresponding partial product, wherein the third option is associated with a second element of the two elements of the first vector;
> when the first bit and the second bit of the binary number are 1, selecting the sum of the two elements of the first vector as a fourth option of the plurality of options for the corresponding partial product;
> wherein the value associated with the selected option is left-shifted by a weight of the bits in the binary number.

5. The hardware module of any of claims 1 to 4, wherein the grouping of bits of the at least two elements of the second vector into the binary number comprises pairing equal weight bits of the two elements of the second vector into binary number pairs.

6. The hardware module of claim 3, wherein the logic circuitry is further configured to perform:
determining the plurality of options based on the elements of the at least two elements of the first vector, wherein a bitwise operation between the elements of the first vector is subtracted from each of the plurality of options to define a plurality of modified options, wherein each of the plurality of modified options is a bitwise operation between the elements of the first vector.

7. The hardware module of claim 6, wherein the binary number is a two bit number, and the logic circuitry is further configured to perform:

when two bits of the binary number are 0, selecting a first modified option of the plurality of modified options for the corresponding partial product, wherein the first modified option is sign extended with 1s;

when a first bit of the binary number is 1 and a second bit of the binary number is 0, selecting a second modified option of the plurality of modified options for the corresponding partial product, wherein the second modified option is associated with a first element of the two elements of the first vector;

when the first bit of the binary number is 0 and the second bit of the binary number is 1, selecting a third modified option of the plurality of modified options for the corresponding partial product, wherein the third modified option is associated with a second element of the two elements of the first vector;

when the first bit and the second bit of the binary number are 1, selecting a fourth modified option of the plurality of modified options for the corresponding partial product;

the value associated with the selected modified option is left-shifted by a weight of the bits in the binary number.

8. The hardware module of claim 7, wherein the logic circuitry is further configured to perform:

modifying the array of partial products, the modifying comprising: adding an inverse of the bitwise operation that was subtracted from each of the four options to each of the N rows of bits, in order to compensate for the subtraction,

wherein the array of partial products that has been generated comprises: a first additional row of bits and a second row of additional bits that are associated with the subtraction of the bitwise operation from the plurality of options, and a sign increment row of bits.

9. The hardware module of any of claims 2 to 5, wherein the logic circuitry is further configured to perform: when the elements of the first vector are signed:

inverting a most significant bit of each of the N rows of bits,
inserting a sign extension of 1s above the most significant row of the N rows of bits, and
adding an increment in an additional row at an index of N-1; and
when the elements of the second vector are signed:

inverting N significant bits of a most significant row of the N rows of bits,
inserting a sign extension of 1s above the most significant row of the N rows of bits, and
adding an increment in an additional row at an index of N-1.

10. The hardware module of claim 9, wherein, when the elements of the first vector and the elements of the second vector are signed and at least two of the elements of the first and second vectors have different widths, the respective adding of the increment in the additional row at the index of N-1 are added to become a single increment at index N.

11. The hardware module of any of claims 1 to 10, wherein the logic circuitry is further configured to perform one of:

recoding each of the binary numbers into a sequence of alternating binary number pairs in the form of (x,y), wherein the numbers of x and y are chosen from a set comprising: negative two, negative one, zero, one and two; or

recoding each of the binary numbers into a sequence of alternating binary number pairs in the form of (u,v) and (x,y), wherein numbers of u and v are chosen from a first set comprising zero, and one, and a second set comprising: negative two, negative one, zero, one and two respectively, wherein the digits of x and y are chosen from a third set comprising: negative two, negative one, zero, one and two, and a fourth set comprising: zero, and two, respectively.

12. A method comprising:

receiving an input of a first vector and a second vector, each of the first and second vectors comprising at least two elements, wherein each element is a binary encoded integer;

generating an array of partial products for a dot product operation between the first vector and the second vector, the array of partial products comprising a number of, N, rows of bits;

grouping bits of the at least two elements of the second vector into a binary number, wherein each binary number is associated with a respective row of the N rows of bits;

selecting a partial product value for each of the N rows of bits based on the binary number that is associated with the respective row, such that one partial product is generated per binary number; and

adding the N rows of bits together to compute an output associated with the dot product operation between the first and second vectors.

13. A method of manufacturing, using an integrated circuit manufacturing system, a hardware module as claimed in any of claims 1 to 11.

14. A non-transitory computer readable storage medium having stored thereon a computer readable description of a hardware module as claimed in any of claims 1 to 11 that, when processed in an integrated circuit manufacturing system, causes the integrated circuit manufacturing system to manufacture an integrated circuit embodying the hardware module.

15. An integrated circuit manufacturing system comprising:

a non-transitory computer readable storage medium having stored thereon a computer readable description of a hardware module as claimed in any of claims 1 to 11;

a layout processing system configured to process the computer readable description so as to generate a circuit layout description of an integrated circuit embodying the hardware module; and

an integrated circuit generation system configured to manufacture the hardware module according to the circuit layout description.

101 — a    103 — b

1. PPG — 105

2. CSA — 107

(a)

3. CPA — 109

a*b — 111

151 — a    153 — b    151 — c    153 — d

1. PPG | 1. PPG — 157

155

(b)

2. CSA

159

3. CPA

161

163 — a*b + c*d

**FIGURE 1**

| 15 | 14 | 13 | 12 | 11 | 10 | 9 | 8 | 7 | 6 | 5 | 4 | 3 | 2 | 1 | 0 |

**FIGURE 2**

FIGURE 3

FIGURE 4

EP 4 654 003 A1

FIGURE 5

FIGURE 6

EP 4 654 003 A1

FIGURE 7

EP 4 654 003 A1

FIGURE 8

EP 4 654 003 A1

FIGURE 9

EP 4 654 003 A1

FIGURE 10

**FIGURE 11**

Input          Input

1201

Receiver circuitry

1203

1205

Logic circuitry

Grouping circuitry
1207

Selector circuitry
1209

Adder circuitry

1211

Output

FIGURE 12

Receiving an input of a first vector and a second vector, each of the first and second vectors comprising at least two elements, wherein each element is a binary encoded integer
S1301

Generating an array of partial products for a dot product operation between the first vector and the second vector, the array of partial products comprising a number of, N, rows of bits
S1303

Grouping bits of the at least two elements of the second vector into a binary number, wherein each binary number is associated with a respective row of the N rows of bits
S1305

Selecting a partial product value for each of the N rows of bits based on the binary number that is associated with the respective row, such that one partial product is generated per binary number
S1307

Adding the N rows of bits together to compute an output associated with the dot product operation between the first and second vectors

S1309

**FIGURE 13**

1402    1404

1414

CPU    GPU

1410

Display    1416

Speakers    1418

1420

Camera    1422

1406    Memory    NNA

1412    1408

**FIGURE 14**

**FIGURE 15**

Europäisches
Patentamt

European
Patent Office

Office européen
des brevets

# EUROPEAN SEARCH REPORT

**Application Number**

EP 25 17 7769

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 6 393 554 B1 (OBERMAN STUART F [US] ET AL) 21 May 2002 (2002-05-21)<br>* figures 4, 5A, 5B, 6, 14, 15 *<br>* column 10 - column 12 *<br>* column 17 - column 18 *<br>----- | 1-15 | INV.<br>G06F7/544<br>G06F7/533 |
| X | US 2020/125329 A1 (LANGHAMMER MARTIN [GB]) 23 April 2020 (2020-04-23)<br>* figures 2-5 *<br>* paragraph [0023] - paragraph [0033] *<br>----- | 1,12-15 | |

**TECHNICAL FIELDS SEARCHED (IPC)**

G06F

The present search report has been drawn up for all claims

| Place of search | Date of completion of the search | Examiner |
|---|---|---|
| Munich | 27 May 2025 | Winkelbauer, Andreas |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 25 17 7769

This annex lists the patent family members relating to the patent documents cited in the above-mentioned European search report.
The members are as contained in the European Patent Office EDP file on
The European Patent Office is in no way liable for these particulars which are merely given for the purpose of information.

27-05-2025

| Patent document cited in search report | Publication date | Patent family member(s) | Publication date |
|---|---|---|---|
| US 6393554 B1 | 21-05-2002 | NONE | |
| US 2020125329 A1 | 23-04-2020 | EP 3842926 A1 | 30-06-2021 |
| | | US 2020125329 A1 | 23-04-2020 |
| | | US 2025123804 A1 | 17-04-2025 |

EPO FORM P0459

For more details about this annex : see Official Journal of the European Patent Office, No. 12/82

**EP 4 654 003 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- GB 2407354 A